# EUROPÄISCHE PATENTSCHRIFT

(11) **EP 3 648 416 B1**
(45) Veröffentlichungstag und Bekanntmachung des Hinweises auf die Patenterteilung: **16.08.2023**
(21) Anmeldenummer: 19020612.8
(22) Anmeldetag: 04.11.2019
(51) Int. Cl.: H04L 12/40, H04L 12/413

(54) **AUTOMATISIERUNGSGERÄT MIT INTEGRIERTER NETZWERK-ANALYSE UND CLOUD-ANBINDUNG**
AUTOMATION DEVICE WITH INTEGRATED NETWORK ANALYSIS AND CLOUD CONNECTION
APPAREIL D'AUTOMATISATION À ANALYSE DE RÉSEAU INTÉGRÉE ET CONNEXION EN NUAGE

(30) Priorität: 05.11.2018 DE 102018008674
(43) Veröffentlichungstag der Anmeldung: 06.05.2020
(73) Patentinhaber: Hilscher Gesellschaft Für Systemautomation MBH, 65795 Hattersheim (DE); Hilscher, Hans Jürgen, 65795 Hattersheim (DE)
(72) Erfinder: Hilscher, Hans-Jürgen, D-65795 Hattersheim (DE)
(74) Vertreter: Dreykorn-Lindner, Werner

(56) Entgegenhaltungen:
- DE-A1-102005 023 938
- DE-A1-102009 046 041
- US-A1- 2008 075 012
- US-A1- 2011 268 112

## Beschreibung

Die Erfindung betrifft, gemäß Oberbegriff des Patentanspruchs 1 und Patentanspruch 6, ein Automatisierungsgerät mit integrierter Netzwerk-Analyse und Cloud-Anbindung.

Die kontinuierliche voranschreitende Vernetzung der Produktion führt dazu, dass Maschinen mit immer mehr Sensoren ausgerüstet werden. Der Anstieg an Sensoren und Aktoren und dem daraus resultierenden Anstieg an Verkabelung führt jedoch zum Problem, dass die Wartung, Fehleranalyse und Installation von kabelgebundenen Sensoren immer komplizierter wird. Mit der Einführung von Industrie 4.0 kommt der Erfassung von Geräte- und Sensordaten und deren Übertragung auf eine Cloud Plattform eine zentrale Bedeutung zu.

In der Automatisierung sind Sensoren an dezentralen Ein-/Ausgangskomponenten angeschlossen und diese wiederum wie Antriebe, RFID-Controller und andere Peripheriegeräte über ein echtzeitfähiges Real-Time Ethernet Netzwerk untereinander und mit der Steuerung verbunden. Die Industrie 4.0 relevanten Daten stellt die Steuerung zur Verfügung oder werden über spezielle Gateways direkt dem Real-Time Ethernet Netzwerk entnommen. Das separate Gateway hat den Vorteil, dass dieses über das Netzwerk Daten direkt aus den angeschlossenen Geräten auslesen kann und dies flexibel bei laufender Anlage optimiert werden kann ohne in die Steuerung und deren Konfiguration einzugreifen.

Der Nachteil dieser Lösung besteht in den zusätzlichen Kosten eines dedizierten Gateway, zusätzlicher Installationsaufwand und als Netzwerkteilnehmer ist dies sowohl im Engineering als auch in der Konfiguration der Steuerung und des Netzwerks zu berücksichtigen ist.

Das Nachrüsten in eine laufende Anlage führt damit immer zu einem längeren Stillstand und vor allem zu einem kritischen Eingriff eines Experten mit Wissen über die Anlage.

Nach aktuellem Stand der Technik sind die Funktionen Netzwerkanalyse und Cloud-Anbindung nur als eigenständige Geräte im Markt vorhanden, die ergänzend zu den Automatisierungskomponenten ins Netzwerk eingeschleift werden.

Beispielsweise ist aus der DE 10 2004 017 529 A1 ein Automatisierungsnetzwerk bekannt, welches ein Automatisierungsgerät, ein Programmiergerät zur Projektierung des Automatisierungsnetzwerks, eine Bedien- und Beobachtungsstation, welche die Schnittstelle zu einem Anwender bildet, sowie Feldgeräte, mit welchen ein zu steuernder Prozess beeinflussbar ist. Des Weiteren weist das Automatisierungsnetzwerk Netzwerkkomponenten auf, die zur Verbindung verschiedener Segmente eines Datenübertragungsnetzwerks dienen. Die Netzwerkkomponente ist in das Feldgerät integriert. An einem Port der Netzwerkkomponente ist das Automatisierungsgerätangeschlossen, während die beiden anderen Ports jeweils mit einem Netzwerksegment verbunden sind. Ein vierter Port der Netzwerkkomponente ist nicht belegt. Die Netzwerkkomponente kann als Access Point, das heißt als Zugangspunkt für mobile Feldgeräte mit Datenübertragung über Funk dienen. Mit dieser Netzwerkkomponente besteht für ein mobiles Feldgerät eine Funkverbindung. Das Datenübertragungsnetzwerk ist auf der Basis von Ethernet realisiert und nutzt Kommunikationsmechanismen gemäß PROFINET 1/0. Prozessdaten werden zwischen dem Automatisierungsgerät und den Feldgeräten zyklisch zur Gewährleistung einer Prozesskommunikation übertragen. Für Meldungen der Netzwerkkomponente, die Fehlerzustände oder Warnhinweise betreffen, wird der azyklische Bereich genutzt, nutzt. Für diese Meldungen wird ebenfalls ein Kommunikationsmechanismus gemäß PROFINET I/O genutzt, das heißt derselbe Kommunikationsmechanismus, der auch zur automatisierungstechnischen Feldkommunikation dient. Diese Zustandsmeldungen werden durch das Automatisierungsgerät empfangen und ausgewertet. Ein Beispiel für derartige Zustandsmeldungen ist ein Link Down, das heißt ein Port einer Netzwerkkomponente sendet nicht mehr, beispielsweise weil das Kabel zum Anschluss des jeweiligen Segments an den Port abgefallen ist. Ein weiteres Beispiel ist die Meldung einer Netzwerkkomponente, dass eine redundante Spannungsversorgung ausgefallen ist und daher nur noch eine Spannungsversorgung zum Weiterbetrieb der Netzwerkkomponente zur Verfügung steht. Da im Automatisierungsgerät das gesamte Abbild des zu steuernden Prozesses und des Datenübertragungsnetzwerks (d.h. Prozesswerte und Diagnosestatus) vorliegt, kann das Steuerungsprogramm des Automatisierungsgeräts die Ereignisse aus Prozess und Netzwerk miteinander verknüpfen und in geeigneter Weise auf von den Netzwerkkomponenten gemeldete Fehler reagieren. Die Netzwerkkornponenten werden als eine gesonderte Klasse von Feldgeräten gemäß PROFINET I/O-Standard modelliert. Dadurch sind die Prozessmeldungen leicht von Zustandsmeldungen des Datenübertragungsnetzwerks unterscheid bar. Änderungen des Prozess sowie des Netzwerkzustands werden einem Anwender auf der Bedien- und Beobachtungsstation angezeigt. An der Bedien- und Beobachtungsstation können direkt aus den Netzwerkkomponenten gewonnene Detail-Informationen über das Datenübertragungsnetzwerk angezeigt werden. Anhand dieser Detailinformationen kann durch den Anwender entschieden werden, wie ein eventueller Fehlerzustand in einer der Netzwerkkomponenten zu beheben ist. Zur Kommunikation enthält ein Automatisierungsgerät einen Physical Layer Baustein, der einen Bestandteil eines Kommunikationsprozessors 32 bildet. Die übertragenen oder zu übertragenden Daten tauscht der Kommunikationsprozessor mit einer CPU aus. Eine Schnittstelle dient zum Anschluss eines Programmiergeräts an das Automatisierungsgerät 30. Alternativ ist auch der direkte Anschluss eines Programmiergerätes an das Netzwerk mit vollem Zugriff auf das Automatisierungsgerät möglich. Dabei kann das Programmiergerät zur Auswertung auf eine Diagnosezustandsliste und einen Meldepuffer lesend zugreifen. Aufgrund des sofortigen Erkennens von Ereignissen im Netzwerk, das beispielsweise im azyklischen Teil des Anwenderprogramms stattfindet, wird eine direkte und schnelle Reaktion des Automatisierungsgeräts ähnlich einer Reaktion auf Veränderungen des Prozesszustands ermöglicht.

Des Weiteren ist ein Netzwerkauskoppler, auch Network Tap genannt, als Netzwerkkomponente bekannt, um übertragene Daten mithören zu können, ohne dass die übertragenen Daten beeinflusst werden. Solche Netzwerkauskoppler werden im Allgemeinen für eine Netzwerküberwachung eingesetzt, da hier Parameter, wie ein Durchsatz oder eine Latenz, nicht durch Messung beeinflusst werden. Für Industrieumgebungen besteht der Bedarf, Diagnosedaten rückwirkungsfrei in einem sicherheitskritischen Netz zu erfassen und die Diagnosedaten einem Diagnosenetzwerk, das üblicherweise in einem Netz mit geringeren Sicherheitsanforderungen realisiert ist, bereitzustellen. Hier tritt das Problem auf, dass eine Komponente zur Einwegdatenübertragung nicht aktiv das Anfragen einer Information in dem Netzwerk mit hoher Sicherheitsanforderung steuern oder beeinflussen kann. Aus der DE 10 2014 226 398 A1 ist ein Verfahren zum rückwirkungsfreien Erfassen von Daten von mindestens einer Einrichtung, die in einem ersten Netzwerk mit hoher Sicherheitsanforderung angeordnet ist, in einem zweiten Netzwerk mit geringer Sicherheitsanforderung bekannt, bei dem als ersten Verfahrensschritt Daten bei der mindestens eine Einrichtung entsprechend einem Anfrageprofil durch eine Anfrageeinheit angefordert werden, die innerhalb des ersten Netzwerks angeordnet ist. Anschließend erfolgt ein Mithören der von der mindestens einen Einrichtung auf die Anforderung an die Anfrageeinheit gesendeten Daten innerhalb des ersten Netzwerks durch eine Mithöreinheit und ein Übermitteln der Daten an eine Auswerteeinheit in dem zweiten Netzwerk. Dort werden die mitgehörten Daten mit den gemäß dem Anfrageprofil erwarteten Daten verglichen und ein Alarmsignal bereitgestellt, wenn die mitgehörten Daten von den gemäß dem Anfrageprofil erwarteten Daten abweichen. Unter einem rückwirkungsfreien Erfassen von Daten ist hierbei zu verstehen, dass durch die Übertragung vom sicherheitsrelevanten ersten Netzwerk in das weniger sicherheitsrelevante zweite Netzwerk keinerlei Daten oder Störungen in das sicherheitsrelevante erste Netzwerk eingebracht werden. Durch das Anfordern der Daten entsprechend einem vorgegebenen Anfrageprofil, das sowohl in der Anfrageeinheit als auch in der Auswerteeinheit bekannt ist, kann eindeutig festgestellt werden, ob alle benötigten Daten in das zweite Netzwerk übertragen wurden und somit eine korrekte Funktion gewährleistet werden. Durch das Bereitstellen eines Alarmsignals kann beispielsweise eine Fehlerrate bei der Anforderung und/oder dem Mithören und/oder der Übermittlung ermittelt und überwacht werden. Dies ist durch ein ausschließliches Mithören der Daten sichergestellt. Das Mithören kann hier beispielsweise durch einen Netzwerkauskoppler, also einem Network Tap, durchgeführt werden. Die beim Gegenstand der DE 10 2014 226 398 A1 vorgesehene Vorrichtung zum rückwirkungsfreien Erfassen von Daten enthält einer Einrichtung, die in einem ersten Netz mit hoher Sicherheitsanforderung angeordnet ist, und in einem zweiten Netzwerk mit geringer Sicherheitsanforderung, eine Anfrageeinheit, die innerhalb des ersten Netzwerks angeordnet und derart ausgebildet ist, Daten bei der mindestens einen Einrichtung entsprechend einem Anfrageprofil anzufordern. Sie enthält eine Mithöreinheit, die innerhalb des ersten Netzwerks angeordnet ist und derart ausgebildet ist, Daten die von der mindestens einen Einrichtung auf die Anforderung gesendet wurden, mitzuhören und an eine Auswerteeinheit zu übermitteln. Die Vorrichtung umfasst des Weiteren eine Auswerteeinheit, die in dem zweiten Netzwerk angeordnet und derart ausgebildet ist, die mitgehörten Daten mit den gemäß dem Anfrageprofil erwarteten Daten zu vergleichen und eine Alarmeinheit, die derart ausgebildet ist, ein Alarmsignal bereitzustellen, wenn die mitgehörten Daten von den gemäß dem Anfrageprofil erwarteten Daten abweichen. Die Vorrichtung ermöglicht es somit, gezielt Daten durch eine Anfrage in der Einrichtung zu stimulieren und die Daten nach Übertragung in das zweite weniger sichere Netzwerk mit dem gleichen Anfrageprofil, das in der Auswerteeinheit bekannt ist, zu vergleichen und somit sicherzustellen, dass eine zuverlässige Auswertung der Daten möglich ist. In einer vorteilhaften Ausführungsform der Vorrichtung ist die Mithöreinheit und/oder die Anfrageeinheit derart ausgebildet, ein Alarmsignal zu erkennen und sich daraufhin selbständig neu zu starten oder die Auswerteeinheit derart ausgebildet ist, nach Erkennen des Alarmsignals eine Weitergabe oder ein Auslesen der mitgehörten Daten zu blockieren. In einer Variante der Vorrichtung ist die Auswerteeinheit derart ausgebildet, mitgehörte Daten abzuspeichern, eine Überprüfung der Daten durchzuführen und erst nach einer erfolgreichen Überprüfung die Daten an eine Diagnoseeinrichtung zu übermitteln. In einer weiteren Variante der erfindungsgemäßen Vorrichtung ist die Auswerteeinheit derart ausgebildet, zu überprüfen, ob die mitgehörten Daten dem Anfrageprofil entsprechen und/oder die mitgehörten Daten eine gültige kryptographische Prüfsumme aufweisen, und lediglich die erfolgreich überprüften Daten an die Diagnoseeinrichtung zu übermitteln oder bei einer nicht erfolgreichen Überprüfung einen Ersatzwert oder eine Fehlernachricht an die Diagnoseeinrichtung zu übermitteln.

Um auch kryptographisch geschützte, in einem ersten Netzwerk übertragene Daten in ein weniger sicheres zweites Netzwerk zu übertragen und dort auswerten zu können, ist in Weiterbildung hierzu aus der DE 10 2015 200 279 A1 eine Vorrichtung zur Durchführung einer kryptographisch geschützten Kommunikation sowie ein Verfahren zur rückwirkungsfreien Erfassung von Daten, die zwischen Vorrichtungen in einem ersten Netzwerk kryptographisch geschützt übertragen werden und durch die Einwegübertragungseinrichtung in einem zweiten Netzwerk mitgehört werden, bekannt. Das Verfahren weist als Verfahrensschritte ein Aushandeln von mindestens einem kryptographischen Parameter zwischen den kommunizierenden Vorrichtungen im ersten Netzwerk zur Verwendung in einer nachfolgenden Kommunikation auf. Im nächsten Verfahrensschritt wird eine Übertragungsstruktur in mindestens einer der Vorrichtungen, in der zumindest teilweise die ausgehandelten kryptographischen Parameter enthalten sind, erzeugt und innerhalb des ersten Netzwerks übertragen. Im darauffolgenden Verfahrensschritt wird die Übertragungsdatenstruktur durch eine Einwegübertragungseinrichtung mitgehört und in das zweite Netzwerk übermittelt. In einem vorteilhaften Ausführungsbeispiel des Verfahrens wird die Übertragungsdatenstruktur durch einen konfigurierbaren kryptographischen Übertragungsschlüssel geschützt übertragen. Dies stellt insbesondere sicher, dass die kryptographischen Parameter ausschließlich von einem Berechtigten, mit dem der Übertragungsschlüssel vereinbart wurde, ausgelesen werden können. Die beim Gegenstand der DE 10 2015 200 279 A1 vorgesehene Vorrichtung zur Durchführung einer kryptographisch geschützten Kommunikation umfasst eine Aushandlungseinheit, die derart ausgebildet ist, kryptographische Parameter zur Durchführung einer kryptographisch geschützten Kommunikation mit einem Kommunikationspartner auszuhandeln. Die Vorrichtung umfasst weiterhin eine Erzeugungseinheit, die derart ausgebildet ist, eine Übertragungsdatenstruktur zu erzeugen, in der zumindest teilweise die ausgehandelten kryptographischen Parameter enthalten sind, und diese in das erste Netzwerk zu übermitteln. Weiterhin kann die Vorrichtung eine Erzeugungseinrichtung aufweisen, welche einen konfigurierbaren kryptographischen Übertragungsschlüssel erzeugt und derart ausgebildet ist, die Übertragungsdatenstruktur durch den kryptographischen Übertragungsschlüssel geschützt in das erste Netzwerk auszugeben. Damit ist sichergestellt, dass nur Berechtigte die Übertragungsdatenstruktur auswerten und zur Entschlüsselung der im ersten Netzwerk übertragenen Daten verwenden können. Damit kann auch konfiguriert werden, wer welche Nachrichten auswerten kann. So können beispielsweise kryptographische Parameter für Steuerungsnachrichten durch einen ersten kryptographischen Übertragungsschlüssel verschlüsselt werden und beispielsweise kryptographische Parameter für die Verschlüsselung von Diagnosedaten durch einen zweiten Übertragungsschlüssel, verschlüsselt werden. Ist der erste Übertragungsschlüssel nur der Auswerteeinheit bekannt, so kann die erste Einwegübertragungseinheit zwar die Steuerungsnachrichten, nicht aber die Diagnosedaten entschlüsseln. Weiterhin kann eine Mithöreinheit vorgesehen werden, die derart ausgebildet ist, kryptographische Parameter zwischen Vorrichtungen in einem ersten Netz mitzuhören und eine Speichereinheit, die derart ausgebildet ist, die kryptographischen Parameter zu speichern und in ein zweites Netz zu übermitteln. Die Einwegübertragungseinrichtung kann eine Entschlüsselungseinheit aufweisen, die derart ausgebildet ist, aus dem ersten Netzwerk übertragene kryptographisch geschützte Daten mit Hilfe der kryptographischen Parameter zu entschlüsseln. Weiterhin kann die Entschlüsselungseinrichtung derart ausgebildet sein, dass nur erfolgreich kryptographisch geprüfte mitgehörte Daten in das zweite Netzwerk weitergeleitet werden.

Weiterhin ist aus der DE 2017 104 912 A1 ein Verfahren zum Parametrieren eines Feldgeräts der Automatisierungstechnik bekannt, welches mit einem Server über ein erstes Kommunikationsnetzwerk in Kommunikationsverbindung steht. Um auf einfach Art und Weise eine Inbetriebnahme beziehungsweise Instandhaltung eines Feldgeräts zu ermöglichen, weist das Verfahren folgende Verfahrensschritte auf:
- Initiieren des Verfahrens durch Übermitteln eines Befehls zum Parametrieren oder zum Vornehmen von Änderungen der Parameterwerte des Feldgeräts an den Server;
- Übermitteln einer Identifikationsinformation des Feldgeräts an den Server;
- Ermitteln eines auf dem Server gespeicherten digitalen Abbilds des Feldgeräts anhand der übermittelten Identifikationsinformation, welches digitale Abbild Informationen über das Feldgerät, insbesondere Konfigurationseinstellungen des Feldgeräts, sowie messstellenrelevante Informationen, enthält, sowie derart ausgestaltet ist, das Verhalten des Feldgeräts simuliert, bzw. emuliert, wiederzugeben;
- Erstellen und Vorschlagen zumindest eines Parametersatzes für das Feldgerät anhand der auf dem Server enthaltenen Informationen über das Feldgerät mittels einer auf dem Server ausgeführten Anwendungsapplikation;
- Auswahl und Bestätigen des vorgeschlagenen Parametersatzes durch einen Bediener; und
- Übermitteln des bestätigten Parametersatzes an das Feldgerät und Parametrieren des Feldgeräts mit dem übermittelten Parametersatz.

Weiterhin ist vorgesehen, dass die Informationen über das Feldgerät beim Bestellvorgang des Feldgeräts auf den Server geladen werden und das digitale Abbild erstellt wird, und wobei jede Änderung der Konfigurationseinstellungen und der messstellenrelevanten Informationen an den Server zur Aktualisierung des digitalen Abbilds übermittelt werden. Jede Änderung des physischen Feldgeräts während dessen Lebenszeit verursacht somit dieselbe Änderung am digitalen Abbild des Feldgeräts. Das Feldgerät und dessen digitales Abbild sind daher zu jedem Zeitpunkt äquivalent. Weiterhin ist vorgesehen, dass die Anwendungsapplikation das Abbild des Feldgeräts mit weiteren digitalen Abbildern von typengleichen Feldgeräten, oder von Feldgeräten, welche in ähnlichen Messstellen eingesetzt sind, vergleicht und das Resultat des Vergleichs in das Erstellen des Parametersatzes miteinfließen lässt. Auf diese Art und Weise lassen sich in ähnlichen Applikationen bewährte Parametersätze wieder verwenden. Beispielsweise kann geprüft werden, ob typengleiche Feldgeräte in ähnlichen Applikationen eingesetzt werden. Durch Überprüfung deren Historie kann ermittelt werden, ob ein Parametersatz häufig geändert wurde, was indirekt Rückschlüsse auf die Qualität der einzelnen Parametersätze erlaubt. Es kann dann vorgesehen sein, nur Parametersätze, die länger als einen bestimmten festgelegten Zeitraum benutzt werden zu berücksichtigen. Schließlich ist auch vorgesehen das Feldbusnetzwerk, bzw. die in dem Feldbusnetzwerk enthaltenen Komponenten (beispielsweise übergeordnete Einheiten, Gateways, Remote I/Os, etc.) digitale Abbilder auf dem Server aufweisen. Somit ist es möglich, das erfindungsgemäße Verfahren auch zur Konfiguration/Parametrierung, Inbetriebnahme und Instandhaltung des Feldbusnetzwerks, bzw. der Komponenten des Feldbusnetzwerks, zu verwenden. Hierzu ist in der Anlage zumindest ein sogenanntes Edge Device vorgesehen, welches mit dem Feldbus verbunden ist und welches relevante Informationen über die Feldgeräte durch Mithören des Datenverkehrs des Feldbus oder durch Stellen aktiver Anfragen an die Feldgeräte loggt. Das Edge Device ist mit dem ersten Kommunikationsnetzwerk verbunden und übermittelt die Änderungen an einem Feldgerät an den Server, welcher das jeweilige dazugehörige digitale Abbild aktualisiert. Der Server ist insbesondere über das Internet erreichbar und ist bevorzugt als Cloud Computing Plattform ausgestaltet. Jede Änderung am physischen Feldgerät wird direkt mit dem jeweiligen digitalen Abbild synchronisiert, so dass dieses jederzeit identisch zu dem physischen Feldgerät ist.

Um auf Seiten einer Rahmenapplikation eine bessere Übersicht über ein Feldbusnetzwerk und dessen Komponenten zu ermöglichen, ist aus der DE 10 2016 120 972 A1 eine Rahmenapplikation für eine Gerätezugriffssoftware bekannt. Die Rahmenapplikation ist auf einem Host installierbar, wobei in die Rahmenapplikation mindestens ein Treiber einbindbar ist, der für einen Zugriff auf eine zugehörige Feldbuskomponente eines Feldbusnetzwerks ausgelegt ist. Die Rahmenapplikation weist zu jedem eingebundenen Treiber mindestens eine Standardschnittstelle auf, über die ein Datenaustausch zwischen dem Treiber und der Rahmenapplikation erfolgen kann. Die Rahmenapplikation weist zu zumindest einigen der eingebundenen Treiber zusätzlich zu der mindestens einen Standardschnittstelle eine oder mehrere proprietäre Schnittstellen auf, über die ein Datenaustausch zwischen dem jeweiligen Treiber und der Rahmenapplikation erfolgen kann, wobei Informationen zu Zusatzfunktionalitäten, die von dem Treiber oder einer zugehörigen Feldbuskomponente unterstützt werden, über zumindest eine der proprietären Schnittstellen von dem Treiber zur Rahmenapplikation übermittelbar sind. Zwischen der Rahmenapplikation und zumindest einigen der eingebundenen Treiber sind zusätzlich zur mindestens einen Standardschnittstelle eine oder mehrere proprietäre Schnittstellen vorgesehen. Beispielsweise ist das Zusammenführen von Informationen zu Zusatzfunktionalitäten auf Seiten der Rahmenapplikation insbesondere dann von Vorteil, wenn die Rahmenapplikation mit einer Cloud verbindbar ist. Die Informationen zu unterstützten Zusatzfunktionalitäten können beispielsweise zusammen mit anderen Daten in die Cloud hochgeladen werden, so dass von der Cloud aus eine Gesamtübersicht über das System verfügbar ist. Von der Cloud aus kann dann beispielsweise auch eine Freischaltung zusätzlicher Funktionalitäten erfolgen. Dadurch kann die zeitaufwändige Freischaltung von Zusatzfunktionalitäten vor Ort, also am Ort des Feldgeräts, durch eine Freischaltung von der Cloud aus ersetzt werden. Um die verschiedenen Komponenten des Feldbusnetzwerks korrekt ansprechen zu können, benötigt die Gerätezugriffssoftware Informationen über die Eigenschaften und Parameter der Feldgeräte, Gateways, Remote I/Os etc. des Feldbusnetzwerks. Diese Informationen werden von den Herstellern der unterschiedlichen Geräte in der Regel in Form von Gerätebeschreibungsdateien oder Gerätetreibern zur Verfügung gestellt. Zur Gerätebeschreibung für den azyklischen Datenaustausch werden bei den Feldbusprotokollen Profibus-DP, Profibus-PA, Fieldbus Foundation und HART Gerätebeschreibungen gemäß den Standards DTM (Device Type Manager), DD (Device Description), EDD (Enhanced Device Description) sowie FDI Device Packages verwendet. Insbesondere bei den Standards EDD und DTM werden zusätzlich zu Geräteparametern, Gerätefunktionalität und Adressraumbelegung auch Grafikfeatures und grafische Benutzeroberflächen spezifiziert, die die Parametrierung und Konfigurierung des jeweiligen Feldgeräts erleichtern sollen. Zur Erzeugung dieser grafischen Oberflächen sind im Standard EDD spezielle Grafikbefehle vorgesehen, die nach Art einer Interpreter-Sprache abgearbeitet werden. Im Standard FDT/DTM werden die DTMs (Device Type Manager) in Form von dynamisch ladbaren Bibliotheken (DLLs) oder in Form von ausführbaren Dateien (Executables) zur Verfügung gestellt. Ein DTM umfasst auch die genannten Grafikfeatures. Die verschiedenen DTMs zu den verschiedenen Komponenten des Feldbusnetzwerks werden in eine gemeinsame FDT-Rahmenapplikation eingebunden, wobei FDT für "Field Device Tool" steht. Dadurch wird eine gemeinsame Rahmenapplikation zur Verfügung gestellt, in die die DTMs zu verschiedenen Geräten und von unterschiedlichen Herstellern eingebunden werden können. Der FDT-Standard wird in den nächsten Jahren zunehmend durch den Standard FDI Device Packages ergänzt und später eventuell ersetzt. Neben den bisher diskutierten Feldbusprotokollen Profibus, Fieldbus Foundation und HART gewinnen die sogenannten Industrial Ethernet-Protokolle an Bedeutung, zu denen u.a. die Feldbusprotokolle EtherNet/IP, ProfiNet und EtherCAT gehören. Beim Feldbusprotokoll EtherNet/IP ist eine Gerätebeschreibungsdatei entsprechend dem Standard EDS (Electronic Data Sheet) zur Beschreibung sowohl des zyklischen als auch des azyklischen Datenaustauschs vorgesehen. Eine erste mögliche Zusatzfunktionalität, die gegen Bezahlung freigeschaltet werden kann, ist die Konnektivität zur Cloud, die auch als "Internet of Things", abgekürzt IoT, bezeichnet wird. Diese Funktionalität ermöglicht es, Daten von einem DTM aus über die FDT-Rahmenapplikation in die Cloud hochzuladen. Dort könne die Daten archiviert und mit anderen Daten verknüpft werden. Beispielsweise ist es möglich, Daten zur Durchflussmessung in die Cloud hochzuladen und als Basis für Nachbestellungen und Lagerhaltung zu verwenden. Die Nutzung der IoT-Konnektivität wird auf Seiten des DTM freigeschaltet. Eine weitere freischaltbare Zusatzfunktionalität ist die Fähigkeit zur Durchführung von Gerätefunktionsprüfungen und Selbsttests.

Schließlich ist aus der DE 10 2016 215 742 A1 ein Gateway und ein Verfahren zur Anbindung eines Datenquellensystems an ein IT-System bekannt, wobei das Gateway eine echtzeitfähige Middleware und eine nicht-echtzeitfähige Middleware auf einem gemeinsamen Betriebssystem aufweist. Dabei wird auf der nicht-echtzeitfähigen Middleware eine Anwendung zum Kommunizieren über ein Netzwerkprotokoll, beispielsweise TCP/IP, OPC-UA oder http(s), ausgeführt und die nicht-echtzeitfähige Middleware umfasst ein Framework. Echtzeitfähig bedeutet dabei, dass einzelne Rechenschritte innerhalb definierter Zeitspannen abgeschlossen sind. In echtzeitfähigen Umgebungen kann garantiert werden, dass ein Rechenergebnis rechtzeitig vorliegt, so dass insbesondere in Industriemaschinen die Bewegungen unterschiedlicher Aggregate auch synchron ablaufen. Beim Gegenstand der DE 10 2016 215 742 A1 werden Datenquellensysteme aufweisend wenigstens eine Datenquelle, wie z.B. eine Recheneinheit (z.B. speicherprogrammierbare Steuerung (SPS), numerischen Steuerung (NC) oder CNC-Steuerung (Computerized Numerical Control)) oder einen Sensor, insbesondere bereits existierende, auf besonders einfache Weise "internetfähig" gemacht. Es handelt sich dabei um einen skalierbaren Ansatz, um Bestandsmaschinen ohne Programmierung nur mittels webbasierter Konfiguration nachzurüsten. Die Lösung bietet eine modulare Erweiterbarkeit um weitere Sensoren, Logiken und Provider und eine automatische Bereitstellung der dazugehörigen webbasierten Oberflächen. Vorhandene SPS des Datenquellensystems können über das Gateway als zusätzliche Komponente an das Datenquellensystem angebunden wird. Dies ermöglicht eine einfache nachträgliche Anbindung, ohne ein bereits vorhandenes Datenquellensystem zu verändern. SPS-Funktionalitäten müssen in diesem Fall nicht auf dem Gateway vorhanden sein, können jedoch zusätzlich vorgesehen sein, um etwaige weitere Komponenten für das Datenquellensystem direkt an das Gateway anzubinden. Bei gänzlich neu zu installierenden Datenquellensystemen kann das Gateway zudem von Anfang an als SPS verwendet werden, so dass hier initial eine Anbindung des Datenquellensystems an das IT-System bereitgestellt werden kann.

Moderne Prozessleitsysteme mit Feldbus-Interfaces können eine große Anzahl von Feldgeräten unterschiedlicher Hersteller, die an die Prozessleitsysteme angeschlossen sind, miteinander vernetzen. Diese Feldgeräte entsprechen zwar meist einer Feldbus-Norm, weisen aber dennoch meistens nur geringfügige Unterschiede auf, welche in der Systemkonfiguration berücksichtigt werden müssen. Je komplexer das Gesamtsystem wird, desto größer ist die Wahrscheinlichkeit, dass es zu Fehlfunktionen kommt. Als Reaktion auf eine Fehlfunktion kann eine Fehleranalyse durchgeführt werden, wobei es Ziel dieser Fehleranalyse ist, die Fehlerursache zu entdecken und zu beheben. Hierbei ist es oft unerlässlich, die Daten, die zwischen Feldgerät und Leitsystem ausgetauscht werden, direkt auf der Feldbusleitung aufzuzeichnen. Zum Aufzeichnen dieser Daten werden sogenannte Busmonitore verwendet. Diese relativ teuren Busmonitore sind kommerziell von verschiedenen Herstellern erhältlich. Aufgrund ihrer Komplexität können die Busmonitore meist nur von geschulten Benutzern bedient werden, wodurch zusätzliche Kosten verursacht werden. Die Installation und Inbetriebnahme eines derartigen Busmonitors gestaltet sich oft als äußerst zeitintensiv. Ein weiterer Nachteil der Busmonitore nach dem Stand der Technik ist, dass das Prozessleitsystem während dieser Zeit außer Betrieb genommen werden muss. Außerdem müssen die Busmonitore direkt im Feld installiert werden, da ein direkter Feldbusanschluss notwendig ist, und sie weisen meist nicht die Möglichkeit einer Ferndiagnose auf. Insbesondere die Ferndiagnose aber ist ein wichtiges Instrument zur Einsparung von Personal- und Transportaufwand. Um eine Vorrichtung zur Fehleranalyse von Systemen, insbesondere von Feldbussystemen, die ein Interface zu einem seriellen Bussystem aufweisen, bereitzustellen, das sich durch eine Verminderung des Hardware-Aufwands und eine schnellere Diagnosemöglichkeit gepaart mit einfacherer Bedienbarkeit auszeichnet und bei der die Möglichkeit der Ferndiagnose besteht und ein Herunterfahren der Anlage, wie es bei Installation eines Busmonitors nach dem Stand der Technik notwendig ist, zu vermeiden, ist aus der DE 102 52 278 A1 ein sogenannter systemintegrierter Busmonitor bekannt. Der systemintegrierte Busmonitor ist derart ausgelegt, dass ein Betrieb in einem Feldbus-Interface möglich ist, wobei die Aufzeichnungen der auf dem Feldbus übertragenen Daten durch mindestens eines der an den Feldbus angeschlossenen Feldbus-Interfaces erfolgt. In einer bevorzugten Ausführungsform ist mindestens ein Feldbus-Interface bereits redundant im System vorhanden. Somit muss diese Hardwarekomponente nicht extra installiert werden. Vielmehr wird auf eine bestehende, angeschlossene Komponente zurückgegriffen, wodurch der Inbetriebsetzungsaufwand deutlich herabgesetzt wird. Dieses zusätzliche, redundante Feldbus-Interface wird in einem Monitormodus betrieben. Wenn für das Feldbus-Interface, wie in einer anderen Ausführungsform, ein ASIC ("Application Specific Intergrated Circuit" oder "Anwendungsspezifische integrierte Schaltung") verwendet wird, muss dieses ASIC über einen Monitormodus verfügen. Das Feldgerät kommuniziert mit einem Prozessleitsystem, welches über das Profibus-Interface mit einem Profibus-ASIC ASP2 angeschlossen ist. Insbesondere läuft der systemintegrierte Busmonitor in dem redundanten Profibus-Interface mit dem Profibus-ASIC ASPC2, welches im Monitormodus betrieben wird und welches die Daten, die auf dem Feldbus übertragen werden, liest. Mittels einer Aufzeichnungssoftware werden Daten, die auf dem Feldbus übertragen werden, in einem Speicher hinterlegt. Der Speicher des Profibus-Interfaces kann jedoch nur eine begrenzte Datenmenge speichern. Daher ermöglicht eine Aufzeichnungssoftware die Filterung der Daten vor dem Hinterlegen im Speicher, wodurch die aufgezeichnete Datenmenge deutlich reduziert wird. Der Monitormodus des Profibus ASIC ASPC2 unterstützt das Filtern von Daten, so dass die Datenfilterung auch direkt über die ASIC erfolgen kann. Sobald die auf dem Feldbus übertragenen und gefilterten Daten im Speicher hinterlegt wurden, werden Mechanismen des Prozessleitsystems genutzt, um diese Daten aus dem Speicher des Profibus-Interfaces auszulesen. Nach dem Auslesen wird ein Ferndiagnosemechanismus verwendet, um diese Daten dem Benutzer sichtbar zu machen. Dies kann entweder unter Verwendung von Internet oder einer Telefonleitung durch Verschicken der Daten per Email erfolgen oder indem die Daten online mit einer Auswerteeinheit in Gestalt eines herkömmlichen PC mit installierter Auswertesoftware angesehen werden. Diese Auswerteeinheit kann die ausgelesenen Datenströme interpretieren und/oder in eine menschenlesbare Form wandeln. Vorzugsweise ist der integrierte Busmonitor als Profibus-Anwendung mit Web-Server im Controller realisiert. Das Auslesen und Filtern der auf dem Feldbus übertragenen Daten und das Hinterlegen dieser Daten im Speicher erfolgt wie vorstehend beschrieben. Nach dem Auslesen wird der Ferndiagnosemechanismus verwendet, um diese Daten dem Benutzer sichtbar zu machen. Hierfür ist direkt im passiven Controller ein Web-Server mit Auswertesoftware integriert. Somit können die Daten direkt aus dem passiven Controller mit Hilfe eines Internet-Browsers gelesen werden.

Weiterhin ist aus der DE 10 2016 107 491 A1 eine Verbindungseinheit für ein Automatisierungssystem, ein Überwachungssystem mit einer Verbindungseinheit für ein Automatisierungssystem und ein Verfahren zum Betreiben eines Automatisierungssystems bekannt. Die Steuereinheit des Automatisierungssystems kann die Ein- und Ausgangsdaten nicht nur zum Zwecke der Steuerung des Automatisierungsprozesses verarbeiten, sondern auch aus dem Automatisierungssystem an eine externe Dateninfrastruktur weiterleiten. Bei der externen Dateninfrastruktur kann es sich um ein Rechnersystem handeln, welches als sogenannte "Cloud" datenbezogene Dienste anbietet. Die datenbezogenen Dienste können eine Speicherung der Daten zur späteren Verwendung oder eine Auswertung bzw. Analyse der Daten umfassen. Auf diese Weise können etwa ein Energieverbrauch, eine Temperatur oder andere physikalische Parameter des Automatisierungssystems erfasst werden. Um eine verbesserte Anbindung eines Automatisierungssystems an eine externe Dateninfrastruktur zu ermöglichen, ist die Verbindungseinheit als Feldgerät zur Anordnung in einer Feldebene des Automatisierungssystems ausgebildet. Die Verbindungseinheit umfasst ein Feldbusmodul, ein Netzwerkmodul und ein Schnittstellenmodul. Das Feldbusmodul ist an einen Feldbus anschließbar und dazu ausgebildet, die Prozessdaten über den Feldbus mit einer Signaleinheit, die mit dem Automatisierungsprozess über einen Feldanschluss in Verbindung steht, auszutauschen. Das Netzwerkmodul ist an ein externes Datennetzwerk anschließbar und dazu ausgebildet, die Prozessdaten über das externe Datennetzwerk mit der externen Dateninfrastruktur auszutauschen. Das Schnittstellenmodul ist mit dem Netzwerkmodul und dem Feldbusmodul für einen Austausch der Prozessdaten zwischen dem Feldbusmodul und dem Netzwerkmodul verbunden und dazu ausgebildet, den Austausch der Prozessdaten zwischen dem Netzwerkmodul und der externen Dateninfrastruktur eigenständig, insbesondere den Austausch der Prozessdaten periodisch und/ oder bei Eintritt eines in der Verbindungseinheit hinterlegten Ereignisses zu veranlassen. Indem die Verbindungseinheit den Austausch der Prozessdaten mit der externen Dateninfrastruktur eigenständig veranlasst, kann der Austausch der Prozessdaten, insbesondere unabhängig von der Steuerung des Automatisierungsprozesses erfolgen. Da die Verbindungseinheit als Feldgerät ausgebildet ist, leitet die Verbindungseinheit die Prozessdaten lediglich weiter, ohne sie zur Steuerung des Automatisierungsprozesses logisch zu verknüpfen. Weiterhin kann das Feldbusmodul der Verbindungseinheit ein Konfigurationsmodul umfassen, welches dazu ausgebildet ist, eine Abfrage der an den Feldbus angeschlossenen Signaleinheit zu veranlassen und Konfigurationsdaten die Signaleinheit betreffend zur Verfügung zu stellen. Dies erlaubt vorteilhafterweise eine automatisierte Abfrage und Bereitstellung der Konfigurationsdaten durch die Verbindungseinheit. Weiterhin kann die Verbindungseinheit ein Servermodul aufweisen, welches mit dem Netzwerkmodul verbunden und dazu ausgebildet ist, einem Zugriffsmodul eines mit dem Netzwerkmodul über das externe Datennetzwerk verbundenen externen Rechners Konfigurationsdaten der Verbindungseinheit zur Verfügung zu stellen. Die Verbindungseinheit ist dazu ausgebildet, das Feldbusmodul und/oder den Feldbus und/oder die Signaleinheit und/oder das Schnittstellenmodul auf Grundlage der Konfigurationsdaten zu konfigurieren. Weiterhin kann die Verbindungseinheit ein Konvertierungsmodul aufweisen, welches dazu ausgebildet ist, die Prozessdaten zwischen dem Feldbusdatenformat und dem Netzwerkdatenformat zu konvertieren. In Weiterbildung der Verbindungseinheit weist diese ein Speichermodul auf, welches dazu ausgebildet ist, die Prozessdaten nach einem Empfang über den Feldbus und vor einem Versenden über das externe Datennetzwerk zwischen zu speichern. Hierzu umfasst das Schnittstellenmodul ein Sendemodul und ein Empfangsmodul. Indem die Verbindungseinheit den Austausch der Prozessdaten mittels des Öffnens des Sendekanals bzw. des Empfangskanals veranlasst, kann ein eigenständiger Austausch der Prozessdaten zwischen der Verbindungseinheit und der externen Dateninfrastruktur realisiert werden. Ein Austausch der Prozessdaten über Netzwerknachrichten ermöglicht einen plattformunabhängigen und zeitlich entkoppelten Austausch der Prozessdaten zwischen der Verbindungseinheit und der externen Dateninfrastruktur.

Weiterhin ist aus der DE 102014 104 916 A1 eine Vorrichtung zur Sicherstellung einer fehlerfreien Datenkommunikation zwischen zumindest zwei elektronischen Komponenten eines Feldgeräts der Automatisierungstechnik bekannt. Um die Zuverlässigkeit eines Feldgeräts zu erhöhen, weist die Vorrichtung mindestens einen Mikrocontroller oder mindestens einen Mikroprozessor mit einem Busmonitor auf, der die Datenkommunikation auf zumindest einer Datenleitung überwacht und so ausgestaltet ist, dass er einen Fehler oder ein vorgegebenes Ereignis erkennt. Weiterhin weist die Vorrichtung einen Datenlogger auf, der im Falle des Auftretens eines Fehlers oder eines vorgegebenen Ereignisses Daten des zumindest einen Mikrocontrollers oder Mikroprozessors, die in einem definierten Zeitbereich um das Auftreten des Fehlers oder des vorgegebenen Ereignisses liegen, abfragt und aufzeichnet. Weiterhin ist eine Speichereinheit vorgesehen, die den aufgetretenen Fehler und die zeitlich korrelierenden Daten des Mikrocontrollers oder Mikroprozessors vorhält, wobei der aufgetretene Fehler und die zeitlich korrelierenden Daten des zumindest einen Mikrocontrollers oder Mikroprozessors Information über die Ursache des aufgetretenen Fehlers beinhalten. Daher ist es möglich, einen auf einer Datenleitung auftretenden Fehler unmittelbar mit einem entsprechenden problematischen Programmpunkt in der Software eines Mikrocontrollers oder Mikroprozessors zu korrelieren. Nachfolgend lässt sich der Fehler in der Software des Mikrocontrollers oder Mikroprozessors dann gezielt beheben. Bevorzugt wird die Vorrichtung gemäß der DE 10 2014 104 916 A1 während der Entwicklungsphase und/oder Testphase des Feldgeräts genutzt. Weiterhin kann die Vorrichtung eine Testeinheit aufweisen, die auf der zumindest einen Datenleitung einen Fehler oder ein Ereignis auslöst und welche die zeitlich mit dem Auftreten des Fehlers oder des Ereignisses korrelierenden Daten des Mikrocontrollers oder des Mikroprozessors als Reaktion des Mikrocontrollers oder des Mikroprozessors auf den Fehler oder auf das Ereignis aufzeichnet. Bei dieser Weiterbildung wird also gezielt ein Fehler provoziert, um zu überprüfen, wie der Mikrocontroller oder Mikroprozessor auf den Fehler reagiert. Darüber hinaus generiert die Testeinheit zumindest in dem Fall eine Meldung, wenn die Reaktion des Mikrocontrollers oder Mikroprozessors auf den Fehler oder das Ereignis nicht mit der vorhersagbaren Reaktion des Mikrocontrollers oder Mikroprozessors übereinstimmt.

Weiterhin ist aus der DE 10 2005 063 053 A1 ein Verfahren zur Anlagenüberwachung mit einem Feldbus der Prozessautomatisierungstechnik, über den mehrere Feldgeräte mit einer Prozesssteuereinheit und einer Anlagenüberwachungseinheit kommunizieren, bekannt. Um ein Verfahren anzugeben, das ein möglichst hohes Maß von Unabhängigkeit von der Prozesssteuerung aufweist und trotzdem auf Diagnoseereignisse möglichst rasch reagiert ist diese durch folgende Verfahrensschritte gekennzeichnet:
A. Abhören des regelmäßigen Datenverkehrs auf dem Feldbus, der zur Prozesssteuerung dient, durch die Anlagenüberwachungseinheit,
B. Prüfung der Telegramme des regelmäßigen Datenverkehrs auf Informationen, die auf ein Diagnoseereignis bei einem der Feldgeräte hinweisen, und
C. Falls ein Telegramm mit einem Hinweis auf eine Diagnoseereignis festgestellt wird, werden von der Anlagenüberwachungseinheit weitere Diagnoseinformationen vom dem betreffenden Feldgerät angefordert.

Hierzu ist ein Gateway vorgesehen, welches als Anlagenüberwachungseinheit den regelmäßigen Datenverkehr auf dem Feldbus abhört. Dieser regelmäßige (zyklische) Datenverkehr dient im Wesentlichen zur Prozesssteuerung. Im Gateway erfolgt eine Prüfung dieses Datenverkehrs auf Informationen, die auf das Eintreten eines Diagnoseereignisses bei einem der F eldgeräte hinweisen. Dabei werden die einzelnen Telegramme des regelmäßigen Datenverkehrs dahingehend analysiert, ob ein Antworttelegramm eines Slaves mit hoher Priorität übertragen wird. Falls ein Telegramm eines Slaves mit einem Hinweis auf eine Diagnose ereignisses festgestellt wird, fordert das Gateway weitere Diagnoseinformationen von dem betreffenden Feldgerät an. Der wesentliche Vorteil dieses Verfahren besteht darin, dass ein im Gateway vorgesehenen Asset-Management-System nicht regelmäßig jedes einzelne Feldgeräte nach Diagnoseinformationen abfragen muss (azyklischer Verkehr), sondern nur wenn ein konkreter Hinweise auf eine Störung vorliegt.

Weiterhin ist aus der US 2008/0075012 A1 ein tragbarer eigensicherer Feldbuskommunikator bekannt. Dabei wird von einem Feldbuskommunikator ausgegangen, welcher unter der Bezeichnung 375 Field Kommunikator, von Fisher-Rosemount Systems, Inc., Austin, Texas, USA vertrieben wird. Das Modell 375 ist ein eigensicheres Handfeldwartungswerkzeug, das die Kommunikation mit Feldgeräten von mindestens zwei verschiedenen Prozesskommunikationsprotokollen unterstützt. Insbesondere ist das Modell 375 so ausgelegt, dass es HART ^{®}-und FOUNDATION ^{™}-Feldbusvorrichtungen von vielen Herstellern unterstützt. Darüber hinaus kann das Modell 375 verwendet werden, um eine Diagnose für ein wirksames Starten und eine Fehlerbehebung zur effektiven Inbetriebnahme und Fehlersuche von Foundation-Feldbussegmenten durchgeführt werden. Der Feldbuskommunikator kann Gleichspannung und mittleres Rauschen im Netz diagnostizieren, Stromversorgungsprobleme erkennen, indem er niederfrequentes Rauschen überwacht und fehlerhafte Abschlüsse lokalisieren. Stromversorgungsprobleme können erkannt werden, indem niederfrequentes Rauschen auf einem Segment überwacht wird und fehlerhafte Terminierungen und fehlerhafte Feldbusgeräte können diagnostiziert werden, indem der Kommunikationssignalpegel beobachtet wird. In Situationen, in denen eine fehlerhafte Vorrichtung mit einem geeigneten Kommunikationssignalpegel kommuniziert, aber die Kommunikationen selbst fehlerhaft sind, kann die Diagnose von tragbaren Feldbuskommunikatoren des Standes der Technik nicht ausreichen. In solchen Fällen werden relativ größere und potentiell nicht eigensichere Vorrichtungen wie Computer mit geeigneten Hardware-Anpassungen verwendet, um eine Kommunikation auf der Prozessschleife im Wesentlichen zu erfassen, und um einem Techniker es zu ermöglichen, die Kommunikationsfehler zu diagnostizieren. Typischerweise sind solche Computer oder Steuersysteme von den Feldgeräten in einem Steuerraum entfernt angeordnet. Wenn dementsprechend eine Änderung an einem Feldbusgerät im Feld vorgenommen wird, muss der Techniker - um einen Kommunikationsfehler zu adressieren - in den Steuerraum zurückkehren, um die Busüberwachungsfunktionalität in dem Steuersystem aufzurufen oder anderweitig einzurücken, um die Kommunikation des betroffenen Feldbusgeräts zu beobachten. Im Einzelnen kann der tragbare eigensichere Feldbuskommunikator gemäß der US 2008/0075012 A1 durch Hardware, Software oder eine Kombination davon angepasst werden, um als ein Busmonitor zu fungieren. Hierzu umfasst der Feldbuskommunikator vorzugsweise drei Kommunikationsanschlüsse um zu ermöglichen, dass Kommunikationsschleifen und/odervorrichtungen gemäß mindestens zwei Standardprotokollen der Prozessindustrie verarbeitet werden. Wenn zum Beispiel der Feldbuskommunikator mit einer Schleife eines ersten Prozessindustriestandardprotokolls gekoppelt werden soll, wird eine solche Kopplung unter Verwendung eines der Kommunikationsanschlüsse und eines allen gemeinsamen Endgeräts bewirkt. Dementsprechend wird die Verbindung über eine erste Medienzugriffseinheit hergestellt, die dazu konfiguriert ist, auf die Prozesskommunikationsschleife gemäß dem ersten Industriestandardprotokoll zu interagieren. Zusätzlich wird, wenn der Feldbuskommunikator mit einer Prozess-und Steuermessschleife gekoppelt werden soll, die gemäß einem zweiten Industriestandardprotokoll arbeitet, eine solche Verbindung über das gemeinsame Endgerät und einem der Endgeräte hergestellt. Somit wird eine solche Verbindung über eine zweite Medienzugriffseinheit bewirkt, die dazu konfiguriert ist, auf die Prozesskommunikationsschleife gemäß dem zweiten Industriestandardprotokoll zu interagieren. Beide Medienzugriffseinheiten sind mit einem Prozessor gekoppelt, welcher Daten von einer der Medienzugriffseinheiten empfängt und diese Daten entsprechend interpretiert. Der Prozessor ist auch mit einem Tastaturmodul und einem Anzeigemodul gekoppelt. Das Tastaturmodul ist mit der Tastatur am Gehäuse des tragbaren eigensicheren Feldbuskommunikators gekoppelt, um verschiedene Tastatureingaben von einem Benutzer zu empfangen. Das Anzeigemodul ist mit einer Anzeige gekoppelt, um Daten und/oder eine Benutzerschnittstelle bereitzustellen. Der tragbare eigensichere Feldbuskommunikator gemäß der US 2008/0075012 A1 umfasst vorzugsweise einen Infrarot-Datenzugriffsanschluss, ein entfernbares Speichermodul und ein Erweiterungsspeichermodul. Der Infrarot-Datenzugriffsanschluss ist mit dem Prozessor gekoppelt, um es dem Feldbuskommunikator zu ermöglichen, Informationen zu und von einer separaten Vorrichtung unter Verwendung von Infrarot-Drahtloskommunikation zu übertragen. Eine vorteilhafte Verwendung des Infrarot-Datenzugriffsanschluss ist das Übertragen von Daten, die von der Vorrichtung Feldbuskommunikator erfasst werden, wenn dieser als ein Busmonitor verwendet wird. Als weitere drahtlose Kommunikationsverfahren kann auch eine Funkfrequenzkommunikation, eine GPRS-Kommunikation, eine GSM-Kommunikation, eine Wi-Fi-Kommunikation und/oder eine Bluetooth-Kommunikation benutzt werden.

Weiterhin ist aus der DE 102009046041 A1 eine Anordnung zur Bedienung von Feldgeräten in der Automatisierungstechnik mittels eines Konfigurier-/Managementsystems bekannt. In modernen Industrieanlagen sind Feldgeräte in der Regel über Bussysteme (Profibus^{®}, Foundation^{®} Fieldbus, HART^{®}, etc.) mitübergeordneten Einheiten verbunden. Normalerweise handelt es sich bei den übergeordneten Steuereinheiten um Leitsysteme bzw. Steuereinheiten, wie beispielsweise SPS (speicherprogrammierbare Steuerung) oder DCS (Distributed Control System). Die übergeordneten Einheiten dienen unter anderem zur Prozesssteuerung, Prozessvisualisierung, Prozessüberwachung sowie zur Inbetriebnahme der Feldgeräte. PAM-Systeme (Plant Asset Management zu Deutsch: Anlagen-Asset-Management) werden in der Regel durch den Anlagenbetreiber geführt. Üblicherweise sind sie separat von der übergeordneten Steuereinheit, die zur Prozesssteuerung dient, ausgebildet und an ein übergeordneten Anlagennetzwerk angeschlossen. Dadurch kann unter anderem die Erfassung der Assets von mehreren Feldbus-Segmenten in einem gemeinsamen PAM-System erfolgen. Problematisch hierbei ist, dass das PAM-System möglichst zeitnah über Änderungen an einem Feldbus, insbesondere über eine Änderung der informationstechnisch an dem betreffenden Feldbus angeschlossenen Geräte, informiert werden sollte. Um eine Anordnung bereitzustellen, durch welche zumindest Informationen, welche das Netzwerkmanagement des Feldbusses betreffen, möglichst aktuell erfasst und an ein übergeordnetes Konfigurier-/Managementsystem weitergeleitet werden weist die Anordnung gemäß der DE 102009046041 A1 ein Konfigurier-/Managementsystems auf, das über eine Feldbuszugriffseinheit bzw. ein Feldbus-Interface auf die Feldgeräte zugreift und mit den Feldgeräten im azyklischen Datenverkehr kommuniziert. Die Feldgeräte sind über einen Feldbus mit einer übergeordneten in ein Anlagennetzwerk integrierten Steuereinheit verbunden, wobei die Kommunikation zwischen der übergeordneten Steuereinheit und den Feldgeräten im zyklischen und im azyklischen Datenverkehr erfolgt. Ein ausgewähltes, in den Feldbus integriertes Feldgerät weist eine erweiterte Funktionalität auf, die es ihm ermöglicht, den zyklischen und azyklischen Datenverkehr zwischen der übergeordneten Steuereinheit und den Feldgeräten auf dem Bussystem mitzuhören, aufzuzeichnen und an das Konfigurier-/Managementsystem weiterzuleiten. Bevorzugt handelt es sich bei dem Konfigurier-/Managementsystem um ein PAM-System, wie es zuvor bereits beschrieben wurde. Dem PAM-System werden die Informationen direkt oder in aufbereiteter Form bereitgestellt. Eine unnötige Belastung des Datenverkehrs auf dem Bussystem über die Feldbuszugriffseinheit wird hierdurch vermieden. Auch ist keine Änderung an der Feldbuszugriffseinheit erforderlich. Weiterhin ist es nunmehr auch möglich, Diagnosen in einem Bus-Segment durchzuführen, das über einen nicht transparenten Kommunikationsübergang mit einem weiteren Bussystem verbunden ist. Handelt es sich beispielsweise um ein Fieldbus Foundation H1 Feldgerät mit erweiterter Funktionalität, so kann dieses bedarfsabhängig auch eine aktive Kommunikation durchführen; es kann zusätzliche Informationen, die es von einzelnen, an dem Feldbus angeschlossenen Feldgeräten benötigt, gezielt abfragen. Dabei kann das Feldgerät mit erweiterter Funktionalität Informationen abfragen, die im Rahmen der Prozesssteuerung von einer übergeordneten Einheit nicht erhältlich wären. Auf diese Weise können durch das Feldgerät mit erweiterter Funktionalität einem Konfigurier-/ Managementsystem, wie beispielsweise einem PAM-System, zeitnah weitergehende Informationen bereitgestellt werden, als dies durch eine übergeordnete Einheit zur Prozesssteuerung möglich wäre. Beispielsweise werden durch die aktive Kommunikation neben Informationen, die das Netzwerkmanagement des Feldbusses betreffen, auch Diagnoseinformationen, etc. verfügbar. Unter einem kontinuierlichen Abhören bzw. der Durchführung einer aktiven Kommunikation parallel zu dem Abhören des Datenverkehrs wird hierbei verstanden, dass das Feldgerät mit erweiterter Funktionalität den Datenverkehr auf dem Bussystem abhört, unabhängig davon, ob es selbst aktiv eine Kommunikation durchführt. Folglich gelingt ein lückenloses Abhören, ein sog. Listening sämtlicher über den Feldbus übermittelter Telegramme. Technisch kann diese parallele Funktionalität des Feldgeräts mit erweiterter Funktionalität beispielsweise dadurch realisiert werden, dass sich der mechanische Anschluss des Feldgeräts, über den dieses an dem Feldbus angeschlossen ist, in zwei Kanäle aufzweigt, entlang derer die eingehenden Telegramme geleitet werden. Der eine Kanal ist dabei derart ausgebildet, dass die eingehenden Telegramme alle, unabhängig davon, ob sie an das Feldgerät adressiert sind, weitergeleitet werden und dementsprechend deren Inhalt in dem Feldgerät weiterverarbeitet werden kann. Dadurch wird die kontinuierliche Abhör-Funktionalität bereitgestellt. Der andere Kanal ist demgegenüber derart ausgebildet, dass die eingehenden Telegramme nur dann weitergeleitet werden, wenn sie an das Feldgerät mit erweiterter Funktionalität adressiert sind. Dieser Kanal wird dabei insbesondere für die Durchführung einer aktiven Kommunikation (für den Erhalt der Antwort-Telegramme auf entsprechende Anfragen) benötigt. Beispielsweise kann dieser andere Kanal dann, wenn das Feldgerät keine aktive Kommunikation durchführt, abgestellt werden. Bevorzugt erfolgt die Kommunikation bzw. der Datenaustausch zwischen den Feldgeräten und dem Konfigurier-/Managementsystem auf der Feldebene über zumindest einen der in der Automatisierungstechnik gebräuchlichen Feldbusse. Auf der Systemebene werden bevorzugt Datenbusse mit hohen Übertragungsraten, wie High Speed Ethernet, Profibus DP oder Ethernet eingesetzt. Die Kommunikation auf der Feldebene erfolgt beispielsweise unter Nutzung des HART, Fieldbus Foundation oder Profibus PA Protokolls. Die Umsetzung des Protokolls auf der Feldebene auf das Protokoll auf der Systemebene erfolgt mittels einer Umsetzereinheit, die auch als Gateway bezeichnet wird. Werden sowohl ein Feldbus und ein Anlagennetzwerk für die Kommunikation eingesetzt, so sind beide Bussysteme über eine Feldzugriffseinheit, z. B. FieldGate, miteinander gekoppelt.

Schließlich ist aus der US 2011/0268112 A1 ein Anschlussmodul für eine fertige Anschlussvorrichtung bekannt, wobei die Anschlussvorrichtung folgendes umfasst: eine Host-Leiterplatte und eine Anschlussbuchse, die auf der Host-Leiterplatte montiert ist, ein Anschlussmodul mit einer Leiterplatte, die vertikal auf einer Host-Leiterplatte montierbar ist, und wobei das Anschlussmodul so dimensioniert ist, dass es einer Rückseite der Anschlussbuchse entspricht. Durch diese Konstruktion des platzsparenden Anschlussmoduls wird die Standfläche des Anschlussmoduls auf der Leiterplatte reduziert und die Effizienz der Nutzung des Innenvolumens der Anschlussvorrichtung erhöht.

Weiterer Stand der Technik ist in der US 2011/268112 A1 offenbart.

Wie die vorstehende Würdigung des Standes der Technik aufzeigt, sind unterschiedlich ausgestaltete Schnittstellen/Geräte seit langem bekannt, wobei diese für den jeweiligen speziellen Anwendungsfall, insbesondere auf dem Gebiet der Automatisierungstechnik ausgestaltet sind. Mit der Einführung von Industrie 4.0 kommt der Erfassung von Sensordaten eine wachsende Bedeutung zu. In der Regel werden - wie die vorstehende Würdigung des Standes der Technik aufzeigt - Sensoren (oder allgemein IO-Link Geräte) in der Anlage bzw. Maschine an dezentrale Ein-/Ausgangskomponenten angeschlossen, die diese mit der Steuerung oder direkt mit einer Cloud-Applikation über ein standardisiertes Netzwerk verbinden. Der Erfindung liegt die Aufgabe zugrunde, ausgehend von dem aus der DE 10 2016 215 742 A1 bekannten Gateway, ein Automatisierungsgerät mit einem Modul zur Netzwerk-Analyse und einem Modul zur Cloud-Anbindung derart auszugestalten, dass auf ein dediziertes Gateway (d.h. ein Gateway für einen Netzwerkdienst oder mehrere dauerhaft betriebene Dienste, welches nicht nebenbei für andere Aufgaben genutzt wird) verzichtet werden kann.

Diese Aufgabe wird, gemäß Patentanspruch 1, dadurch gelöst, dass eine einzige Analyse- und Cloud-Einheit als eigenständiges Modul des Automatisierungsgeräts in einem ASIC des an ein Netzwerk angeschlossenen Automatisierungsgeräts integriert ist, dass der ASIC einen Ethernet Netzwerk-Controller mit einer ersten Schnittstelle zum verlustfreien Einlesen aller Empfangsdaten des Netzwerkes von daran angeschlossenen Netzwerkkomponenten an der geräteinternen Seite von Ethernet-Übertragern aufweist, dass der Ethernet Netzwerk-Controller eine 2. Schnittstelle aufweist, über welche alle vorhandenen Ethernet Ports mit der Analyse- und Cloud-Einheit verbunden sind und dass die Analyse- und Cloud-Einheit über eine 3. Schnittstelle des ASICs mit einer cloud verbunden ist.

Weiterhin wird diese Aufgabe, gemäß Patentanspruch 6, dadurch gelöst, dass im Automatisierungsgerät eine einzige Analyse- und Cloud-Einheit als eigenständiges Modul in dem an ein Netzwerk angeschlossenen Automatisierungsgerät integriert ist, dass ein im Automatisierungsgerät angeordneter Ethernet-Netzwerk-Controller mit einer ersten Schnittstelle in Form eines UART-, SPI-, SDIO-, MAC-, PCIe-, Dual-Port-Memory, FIFO oder Vergleichbarem zum Austauschen eines Ethernet-Frames mit den Automatisierungsgeräten oder einem internen Ethernet Switch des Ethernet-Netzwerk Controllers ausgestaltet ist, dass der Ethernet-Netzwerk-Controller eine 2. Schnittstelle aufweist, über welche alle vorhandenen Ethernet-Ports mit der Analyse- und Cloud-Einheit verbunden sind und dass die Analyse- und Cloud-Einheit über eine 3. Schnittstelle mit einer cloud verbunden ist.

Das erfindungsgemäße Automatisierungsgerät löst durch die besonders vorteilhafte Integration direkt in die Automatisierungskomponente und Ausprägung der Funktionen Netzwerkanalyse und Cloud Anbindung der Analyse/Cloud-Einheit die vorstehend genannten Probleme. In Minuten erlaubt sie ein Nachrüsten durch Gerätetausch ohne zusätzlichen Installationsaufwand bei völliger Rückwirkungsfreiheit auf die Anlage. Dazu wird kein Anlagenexperte benötigt, sondern kann wie ein Ersatzteiltausch durch die Anlageninstandhaltung ausgeführt werden. Netzwerkanalyse und Cloud Anbindung werden dann einfach durch entsprechende geschulte Fachspezialisten als Service über die cloud remote umgesetzt. Während beim Edge Computing Computer-Anwendungen, Daten und Dienste vom im Netzwerk angeordneten Automatisierungsgerät weg zu den äußeren Rändern eines Netzwerks verlagert werden, werden bei der erfindungsgemäßen Lösung die Datenströme zumindest teilweise an Ort und Stelle direkt verarbeitet. Dadurch, dass die Analyse- und Cloud-Einheit näher an den Sensor/das Feldgerät heranrückt und deren Daten dadurch schnell analysiert und gefiltert werden können, verringert sich das zu übertragende Datenvolumen und damit den Datenaustausch und die Übertragungsstrecke, ebenso die Übertragungskosten und die Wartezeiten. Insgesamt kann so von den Vorteilen der cloud profitiert werden und die Servicequalität verbessert werden. Weitere Vorteile sind, dass ein "Flaschenhals" für den Datentransfer und eine potentielle Fehlerquelle vermieden werden, dass die Sicherheit sich ebenfalls verbessert, da verschlüsselte Dateien näher am Netzwerkkern verarbeitet werden und Viren, verfälschte Daten und Hackerangriffe frühzeitig abgefangen werden können, dass Echtzeit-Anforderungen im Internet der Dinge besser unterstützt werden als dies in der cloud der Fall ist und dass die Skalierbarkeit gegeben ist. Die erfindungsgemäße Analyse- und Cloud-Einheit kann einerseits mit einer Speicherprogrammierbaren Steuerung SPS oder auch einer PC-basierten Steuerung und andererseits mit einer cloud, welche einen Nutzungszugang von Software-Sammlungen und Anwendungsprogrammen (Software as a Service) oder einen Nutzungszugang von Programmierungs- oder Laufzeitumgebungen mit flexiblen, dynamisch anpassbaren Rechen- und Datenkapazitäten (Platform as a Service) oder einen Nutzungszugang von virtualisierten Computerhardware-Ressourcen wie Rechnern, Netzen und Speicher (Infrastructure as a Service) bietet, zusammenarbeiten.

Weitere Vorteile und Einzelheiten lassen sich der nachfolgenden Beschreibung von bevorzugten Ausführungsformen der Erfindung unter Bezugnahme auf die Zeichnungen entnehmen. In der Zeichnung zeigt:
- Fig. 1: die erfindungsgemäße Integration der Analyse- und Cloud-Einheit als eigenständiges Modul in einer Automatisierungskomponente,
- Fig. 2: die erfindungsgemäße Integration der Analyse- und Cloud-Einheit in einem ASIC und
- FIG. 3: das Blockschaltbild der erfindungsgemäßen Analyse- und Cloud-Einheit.

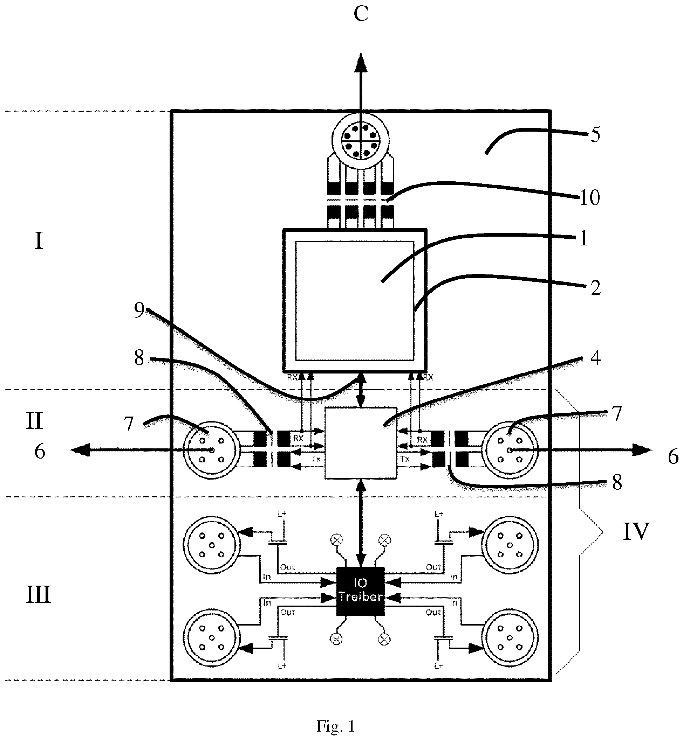

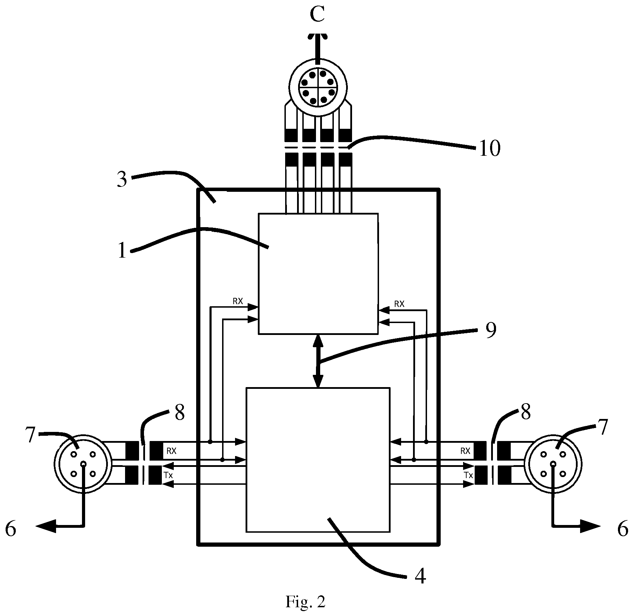

Fig. 1 und Fig. 2 zeigen zwei verschiedene Ausführungsformen der Erfindung, nämlich Fig. 1 die erfindungsgemäße Integration einer Analyse- und Cloud-Einheit 1 als eigenständiges Modul in einer Automatisierungskomponente 5 und Fig. 2 in einem ASIC 3 (anwendungsspezifische integrierte Schaltung, Englisch: application-specific integrated circuit).

Die Analyse- und Cloud-Einheit 1 ist ein in sich autark arbeitendes System. Sie wird über zwei Standardschnittstellen angekoppelt, die auf einem Ethernet Technologie basierenden Netzwerk-Controller 4 bzw. der Automatisierungskomponente 5 an einem Ethernet basierenden Automatisierungsnetzwerk 6 per se verfügt. Dies sind:
- Der Abgriff der Empfangsdaten an Ports 7 des Automatisierungsnetzwerks 6 direkt an der geräteinternen Seite eines Ethernet-Übertragers 8.
- Eine UART- (Universal Asynchronous Receiver Transmitter), SPI- (Serial Peripheral Interface), SDIO- (Secure Digital Input Output), MAC- (Media Access Control), PCIe-(Peripheral Component Interconnect Express) oder DPM- (Device PermissionManager) Schnittstelle 9 zum protokollgerechten Ein- und Auskoppeln eines Ethernet-Frame in das Automatisierungsnetzwerk 6 über einen im Netzwerk Controller 4 enthaltenen Netzwerk-Switch (in der Zeichnung nicht dargestellt).

Über eine dritte Schnittstelle 10 ist die Ethernet-Verbindung direkt mit einer cloud C hergestellt.

Bezogen auf die Software-Entwicklung und die Schaltungsauslegung vorhandener Lösungen ergeben sich nur minimale Anpassungen. Außerdem sind diese Schnittstellen bei unabhängiger Weiterentwicklung von Soft- und Hardware der Automatisierungskomponente 5 und der Analyse- und Cloud-Einheit 1 systembedingt stabil. Von besonderem Vorteil ist, dass die Software der Analyse- und Cloud-Einheit 1 über die vorhandene Cloud Schnittstelle im Laufe der Gerätebetriebszeit weiterentwickelt und über die cloud C einfach aktualisiert werden kann.

Diese beiden Schnittstellen wurden so gewählt, um nachfolgend aufgeführte Analysen und Erfassungen der Daten zu ermöglichen:
- Das parallele Einlesen der Empfangsdaten an den Ports 7 des Automatisierungsnetzwerks 6 ermöglicht die verlustfreie Erfassung aller zyklischen Daten zwischen Steuerung und Netzwerkkomponenten. Bei Anordnung direkt hinter der Steuerung gilt das für die Eingangs- als auch für die Ausgangsdaten.
   Des Weiteren können alle Fehlermeldungen der Geräte und eventuelle Quittierungen über die Steuerung mitgeschrieben werden. Dies erzeugt eine aktuelle Statusübersicht über alle Automatisierungskomponenten 5.
   Des Weiteren ermöglicht das Lesen der Ein- und Ausgangsdaten in Richtung Steuerung und deren Zuordnen zur internen Systemzeit die Analyse der Steuerungszykluszeit. In Richtung Peripheriekomponenten werden unkontrollierte Verzögerungen oder Telegrammausfälle erkannt.
   Des Weiteren kann an Hand von Telegrammwiederholungen erkannt werden, wenn eine entfernte Komponente Daten - z.B. durch EMV Einflüsse - nicht versteht oder nicht antwortet.
   Des Weiteren ist diese Funktion notwendig, um den Konfigurationshochlauf mitzuschreiben und daraus Geräte- und Konfigurationsdaten zu extrahieren.
- Die Schnittstelle zur Einspeisung eines Ethernet-Frames in den Netzwerk Switch (in der Zeichnung nicht dargestellt) erlaubt das gezielte Ansprechen jedes Geräts auf dem Netzwerk. Dabei wird der komplett ausgebildete Ethernet-Frame übergeben und macht damit diese Schnittstelle Protokollunabhängig. Das heißt, dies kann sowohl über standardisierte Protokolle wie OPC UA (Open Platform Communications - Unified Architecture) oder azyklische Dienste des Feldbus-Protokolls erfolgen, als auch in speziellen Anwendungen durch proprietäre Ethernet-Protokolle.
   Über diese Schnittstelle können insbesondere die angeschlossenen Geräte durch Abfragen ihrer Herstellerkennung, Seriennummer und Revisionskennungen identifiziert werden und die Grundlagen zum Asset Management liefern.

Die beschriebene Analyse- und Cloud-Einheit 1 lässt sich je nach Ausführung auf zwei Arten einfach integrieren:
- Als optionales Modul 2 in die vorhandene Schaltungstechnik einer bestehenden Automatisierungskomponente 5.
- Als Einsatz eines speziellen Netzwerk Controllers 3, der die Analyse- und Cloud-Einheit 1 bereits im Silizium integriert hat.

In der Fig. 1 verdeutlichen die Bereiche I die Netzwerk Analyse und Cloud Verbindung, II das Netzwerk Interface in der Feldebene, III die Applikationsebene z.B. digitale Ein-/Ausgänge und IV die Automatisierungskomponente als vorhandene Schaltung, z.B. digitale Ein-/Ausgabe Baugruppe.

Fig. 2 zeigt die erfindungsgemäße Integration der Analyse- und Cloud-Einheit 1 in einem ASIC 3; dabei wurden die gleichen Bezugszeichen wie in Fig. 1 benutzt.

Aufbauend auf dem vorhandenen Automatisierungsgerät 5 ergibt sich damit die erfindungsgemäße Ausgestaltung mit der Analyse- und Cloud-Einheit 1. Diese ist, wie beschrieben, nur über die vorhandenen Schnittstellen des Automatisierungsgeräts 5 in das Netzwerk eingebunden. Durch Einsatz hochintegrierter Technologien lässt sich diese in ein gleich großes Gehäuse einbauen und löst damit die eingangs beschriebene Problematik. Mit der erfindungsgemäßen Lösung entsteht eine Lösungsplattform für OEM-Kunden von ganz unten nach ganz oben - inklusive Cloudapplikationen. Diese bündelt die bisher getrennten Bereiche Data Generation, Data Aggregation und Data Management. Zur Plattform gehört dabei ein OEM-Modul, welches ein auf "netX" basierende Echtzeit-Ethernet-/IoT-Interface und ein IP67-IO-Link- Mastermodul sowie ein Edge-Gateway in IP67-Schutzart für den unmittelbaren Feldeinsatz in einem Gerät zusammenführt. Über eine einheitliche OPC-UA-Schnittstelle werden die gesammelten und gefilterten Geräte- und Prozessdaten für Cloudapplikationen zur Verfügung gestellt. Die Plattform besteht weiterhin aus einem Edge-Portal für die Aufgaben des Data Managements, also unter anderem die Gerätekonfiguration, Wartung und Netzwerkdiagnose. Im Hinblick auf eine sichere Datenübertragung wird Security von der Plattform per se bereitgestellt. Die Bereitstellung der Edge-Connectivity für IO- und IO-Link-Geräte ist in der Summe sehr komplex und setzt die Beherrschung eine Reihe unterschiedlicher Kommunikationsprotokolle voraus. Die erreichte Funktionalität ist aber für unterschiedliche Gerätehersteller vergleichbar bzw. praktisch identisch. Die einheitliche Plattform sorgt daher bei den Geräteherstellern für eine Verringerung der Entwicklungskosten, eine höhere Qualität und eine Reduzierung des Wartungsaufwands. Die Hardware besteht im Wesentlichen aus einem IO- bzw. IO-Link-Chipset mit Edge Connectivity, wobei eine synchrone IO-Link Kommunikation mit einer Zykluszeit bis zu 400 µs erreicht werden kann. Basis bildet ein hochintegriertes Set aus drei ASICS, nämlich einem Netzwerk-Controller mit zwei CPU, welcher in eine Kommunikations- und eine Applikationsseite aufgeteilt ist, zwei intelligente 4-Kanal-IO-Link-Transceiver mit weitreichenden Diagnoseeigenschaften und einem integrierten Edge-Gateway, welches auch den Netzwerk-Gerätescan sowie die Akquise der Echtzeit-Geräte- und - Prozessdaten übernimmt. Damit kann das ansonsten übliche mittlere Gerät, ein separates Edge-Gateway oder auch ein Edge-Controller entfallen. Erfindungsgemäß ist die Edge-Gateway-Funktion gleich in das Modul bei gleichen Gehäuseabmessungen mit eingebaut. Daraus resultiert auch kein Delay im Netz, wobei über OPC UA auch andere Gateways angeschlossen werden können. Die erfindungsgemäße Lösung bringt eine Plug-and-play-Konnektivität in das Edge-Portal mit, ist damit vorbereitet für die Industrie-4.0- Anforderungen und ermöglicht ein einfaches Design der IO- und IO-Link-Geräte. Neben OPC UA werden als zukünftige Anforderungen auch TSN (Time-Sensitive Networking) und Gbit-Ethernet berücksichtigt. Weiterer Vorteil ist die Modularität auf der Softwareseite, wobei über eine Dockerkompatibilität sich Applikationen, zum Beispiel die Netzwerkdiagnose, einfach in das Gateway laden lassen. Im Rahmen der Erfindung kann ein passiver Feldbusknoten on board vorgesehen werden, wodurch sich auch gefilterte zyklische SPS-Daten mit Zeitstempel mit in die cloud C schicken lassen.

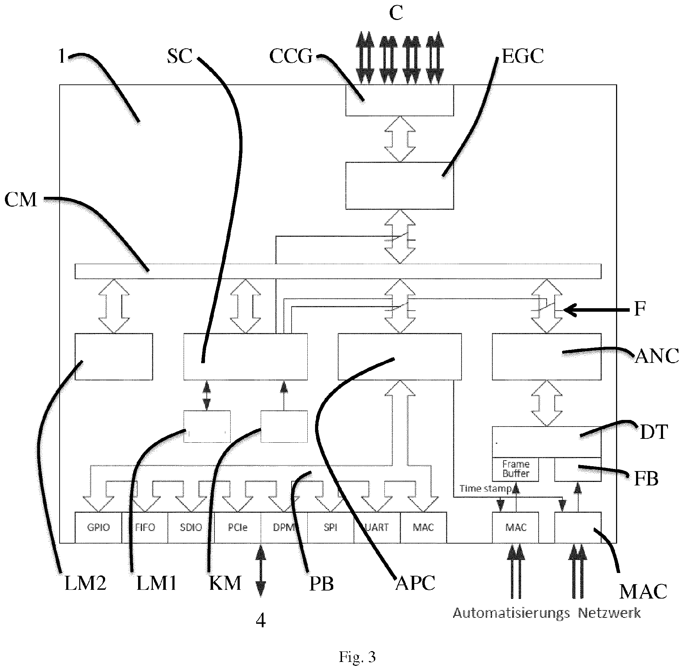

Fig. 3 zeigt das Blockschalt einer Ausführungsform der erfindungsgemäßen Analyse- und Cloud-Einheit 1.

Ein mit Application Core APC bezeichnetes Modul ist eine zentrale Recheneinheit welche den gesamten Ablauf zwischen angeschlossenem Netzwerk-Controller 4 und Analyse und Cloud Einheit 1 steuert. Der Application Core APC generiert die Ethernet Frames, welche über den Netzwerk-Controller 4 in das Automatisierungsnetzwerk (über den Anschluss 7) ein- und ausgekoppelt werden.

Ein Analyzer Core ANC analysiert die empfangenen Ethernet-Frames und die gefilterten Daten und bildet daraus den Geräte- und Netzwerkstatus.

Weiterhin ist in der Analyse und Cloud Einheit 1 ein Edge Gateway Core EGC (eine Recheneinheit) angeordnet, welcher die Daten aggregiert und über die verschiedenen Cloud Connectoren CCG (3. Schnittstelle 10 in Fig. 1 und Fig. 2) in die cloud C überträgt.

Ein Security Core SC ist mit einem Key Memory KM und einem ersten Local Memory LM1 verbunden. Hierbei handelt es sich um ein gekapseltes Sicherheitssystem, welches die Security Keys verwaltet, Verschlüsselungen und Entschlüsselungen von Daten durchführt und die Konfigurationen der Firewalls realisiert. Sie kann über eine Core Connection Matrix CM schreibend und lesend auf die anderen Einheiten zugreifen. Wie Fig. 3 zeigt, sind dies der Analyzer Core ANC, der Edge Gateway Core EGC, der Application Core APC und der Security Core SC. Im Gegensatz dazu können die anderen Einheiten nur Security Aufträge über eine fest definierte API (application programming interface/Schnittstelle zur Anwendungsprogrammierung) übergeben.

Die Core Connection Matrix CM kann auch eine Firewall F aufweisen und so als Verbindungsmatrix zwischen den einzelnen Einheiten und dem zweiten lokalen Speicher LM2 fungieren. Die Firewalls F legen fest, welchen Datenaustausch die einzelnen Einheiten untereinander ausführen können. Abweichungen davon werden registriert und dienen dem Security Core SC dazu Angriffe zu erkennen. Dadurch ist es möglich, Daten einer Vielzahl von Feldgeräten in einer Anlage der Automatisierungstechnik ebenso wie in der Fertigungstechnik auf manipulationssichere Art und Weise zu speichern.

Weiterhin weist die Analyse und Cloud Einheit 1 einen Peripheral Bus auf, d.h. eine Verbindung der Application Core APC mit den verschiedenen Schnittstellen (in Fig. 3 mit GPIO, FIFO, SDIO, PCIe; DPM; SPI, UART, MAC bezeichnet) zum Netzwerk-Controller 4. Ein sogenanntes MAC-Modul MAC mit Time Stamp (aus der Application Core APC) dient als Empfangseinheit der Ethernet-Telegramme des Automatisierungs-Netzwerks. Über den Time Stamp bekommt jedes Telegramm einen Zeitstempel, um zeitliche Unregelmäßigkeiten in der Analyze Einheit ANC (Analyzer core) zu erkennen und auszuwerten.

Weiterhin ist ein Frame Buffer FB vorgesehen, d.h. ein Zwischenspeicher der Empfangsdaten bis ein Ethernet-Frame komplett empfangen wurde und ausgewertet werden kann.

Der Frame Buffer FB ist mit einer Data Filtering und Telegram Identification DT, nämlich einer Hardware Unit zur Echtzeit Erkennung und Filterung der Real-Time Ethernet Daten des Automatisierungsnetzwerks verbunden, wobei die Data Filtering und Telegram Identification DT an den Analyzer core ANC angeschlossen ist.

Weiterhin kann ein Bluetooth-Connector integriert werden, wie dies in der nicht vorveröffentlichten Deutschen Patentanmeldung 10 2018 004 272.4 der Anmelderin beschrieben ist. Das dort beschriebene Anschlussmodul (in der Zeichnung nicht dargestellt) mit einem aktivierbaren und de-aktivierbaren Funk-Sender/Empfänger zur Diagnose und Konfiguration von Geräten nach Montage, ist dadurch gekennzeichnet, dass das Anschlussmodul als ein Standard-Steckverbinder mit einem zweiteiligen Gehäuse ausgestaltet ist, dessen nach der Montage aus einem Gerätegehäuse ragender erster Gehäuseteil durchsichtig ist, und dass auf einem sich in den ersten Gehäuseteil erstreckenden Träger oder einer Leiterplatte eine Antenne und ein optische Schnittstelle zur Aktivierung und De-Aktivierung des Funk-Senders/Empfängers angeordnet sind. Die optische Schnittstelle umfasst sowohl einen Lichtsensor als optischer Empfänger als auch eine LED als optischer Sender, welche direkt an den Funk-Sender/Empfänger angeschlossen sind. Der erste Gehäuseteil ist als optisches Element mit oder ohne eine Linse ausgestaltet und der Standard-Steckverbinder weist die Abmessungen eines Standard M8- und/oder M12-Steckverbinders auf. Die Funk-Schnittstelle des Funk-Senders/Empfängers ist als Bluetooth-Schnittstelle oder NFC-Schnittstelle oder WLAN-Schnittstelle ausgestaltet. Die Leiterplatte weist auf der einen Seite Steckkontakte auf und in Erstreckungsrichtung der Leiterplatte sind nach außerhalb des Gerätegehäuses der Funk-Sender/Empfänger, der optische Sender, der optische Empfänger und die Antenne angeordnet. Damit kann im Rahmen der Erfindung eine Bluetooth-Kommunikation für eine App-basierte Konfiguration und -diagnose vorgesehen werden. Mithilfe der IO-Link-Configuration-App können die Inbetriebnahme und die Diagnose des IO-Link-Masters einfach realisiert werden. Das Diagnose-Dashboard sorgt dabei für einen schnellen Überblick. Das OPC-UA-Interface entsprechend dem IO-Link-Companion-Standard kann entweder über Ethernet oder auch über Bluetooth eingerichtet werden. Den Zugang zu den IO-Link-Gerätebeschreibungsdaten lässt sich über das Device Information Portal herstellen. Damit kann ein einheitliches Edge-Portal eingerichtet werden und beispielsweise die statistische Auswertung der Fehlerdiagnose vorgenommen werden. Aus den in einem Logbuch abgespeicherten Daten lassen sich zum Beispiel Rückschlüsse ziehen, warum bestimmte Fehler in einem Netzwerk einer Fabrikanlage auftauchen oder ein Gerätetausch durchgeführt werden. Mit der in der Deutschen Patentanmeldung 10 2018 004 272.4 der Anmelderin beschriebenen Lösung lässt sich ganz einfach nachvollziehen, welche Geräte mit Seriennummer auf welcher Anlage unterwegs.

Bei der dort beschriebenen Lösung greift das Edge Gateway über OPC-UA-Client und azyklischen Profinet-Diensten auf die Daten der Netzwerkteilnehmer zu, identifiziert diese und ermittelt die Netzwerktopologie. Passiv hört es alle zyklischen Real-Time-Daten mit und liefert die relevanten über einen separaten Gigabit-Anschluss direkt in die Anwender-Cloud.

Alternativ können auch nachladbare Docker-Container vorgesehen werden, welche diese direkt verarbeiten. Security gewährleisten Hardware-Units und eine durchgängige Zertifikat-Verwaltung. Damit wandert die Edge Connectivity ins Device, reduziert Kosten, vereinfacht Handhabung und verbindet Sensorik und Feldgeräte mit ihrem Digitalen Zwilling gemäß Industrie 4.0.

### Bezugszeichenliste:

- 1: Analyse- und Cloud-Einheit
- 2: Modul
- 3: ASIC
- 4: Netzwerk-Controller
- 5: Automatisierungsgerät (-komponente)
- 6: Netzwerk-Interface (Feldebene)
- 7: Anschluss Automatisierungsnetzwerk
- 8: 1. Schnittstelle (Ethernet-Übertrager des Netzwerk-Controllers 4)
- 9: 2. Schnittstelle (UART, SPI, SDIO, MAC, PCIe- oder DPM- Schnittstelle)
- 10: 3. Schnittstelle (Ethernet-Interface zur cloud C)

- APC: Application core
- ANC: Analyzer core
- C: cloud
- CCG: Cloud Connectoren Gbit MAC
- CM: Core Connection matrix
- DT: Data filtering und Telegram Identification
- EGC: Edge Gateway Core
- F: Firewall
- FB: Frame Buffer
- KM: Key memory
- LM1: erstes Local Memory
- LM2: zweites Local memory
- MAC: MAC-Modul (mit Zeitstempel aus Application core APC)
- PB: Peripheral bus
- SC: Security core

## Patentansprüche

1. Automatisierungsgerät mit einem Modul zur Netzwerk-Analyse und einem Modul zur Cloud-Anbindung, **dadurch gekennzeichnet,** dass-eine einzige Analyse- und Cloud-Einheit (1) als eigenständiges Modul (2) des Automatisierungsgeräts (5) in einem ASIC (3) des an ein Netzwerk angeschlossenen Automatisierungsgeräts (5) integriert ist, dass der ASIC (3) einen Ethernet Netzwerk-Controller (4) mit einer ersten Schnittstelle (8) zum verlustfreien Einlesen aller Empfangsdaten des Netzwerkes von daran angeschlossenen Netzwerkkomponenten an der geräteinternen Seite von Ethernet-Übertragern (8) aufweist, dass der Ethernet Netzwerk-Controller (4) eine 2. Schnittstelle (9) aufweist, über welche alle vorhandenen Ethernet Ports mit der Analyse- und Cloud-Einheit (1) verbunden sind und dass die Analyse- und Cloud-Einheit (1) über eine 3. Schnittstelle (10) mit einer cloud (C) verbunden ist.

2. Automatisierungsgerät (5) nach Anspruch 1, **dadurch gekennzeichnet, dass** die Analyse- und Cloud-Einheit (1) in der Weise ausgestaltet ist, dass diese alle zyklischen Daten oder alle azyklischen Daten an diesen Schnittstellen (8, 9, 10) mitschreiben und auswerten kann und dass aus den eingelesenen Daten eine aktuelle Statusübersicht des Netzwerks und der daran angeschlossenen Geräte ermittelt werden kann.

3. Automatisierungsgerät (5) nach Anspruch 1, **dadurch gekennzeichnet, dass** die Analyse- und Cloud-Einheit (1) in der Weise ausgestaltet ist, dass aus den eingelesenen Daten und deren erfasste Empfangszeit die Performance, Unregelmäßigkeiten und Fehler der Steuerung einer Netzwerkkomponente am Netzwerk ermittelt werden können.

4. Automatisierungsgerät (5) nach Anspruch 1, **dadurch gekennzeichnet, dass** die Analyse- und Cloud-Einheit (1) in der Weise ausgestaltet ist, dass aus den eingelesenen Daten und der dazu erfassten Empfangszeit in der Kommunikation der Netzwerkkomponenten Ablauffehler, Übertragungsfehler, Zeitabweichungen, Telegrammverluste und Telegramme, die nicht in das Systemverhalten des Automatisierungsgeräts (5) passen und auf einen Eingriff von außen hinweisen, ermittelt werden können.

5. Automatisierungsgerät (5) nach Anspruch 1, **dadurch gekennzeichnet, dass** die Analyse- und Cloud-Einheit (1) in der Weise ausgestaltet ist, dass aus den eingelesenen Daten der Hochlauf des Automatisierungsgeräts (5) und der darin enthaltenen Konfigurationsparameter ermittelt werden kann.

6. Automatisierungsgerät mit einem Modul zur Netzwerk-Analyse und einem Modul zur Cloud-Anbindung, **dadurch gekennzeichnet, dass** im Automatisierungsgerät (5) eine einzige Analyse- und Cloud-Einheit (1) als eigenständiges Modul (2) in dem an ein Netzwerk angeschlossenen Automatisierungsgerät (5) integriert ist, dass ein im Automatisierungsgerät (5) angeordneter Ethernet-Netzwerk-Controller (4) mit einer ersten Schnittstelle (8) in Form eines UART-, SPI-, SDIO-, MAC-, PCIe-, Dual-Port-Memory, FIFO oder Vergleichbarem zum Austauschen eines Ethernet-Frames mit dem Automatisierungsgerät (5) oder einem internen Ethernet Switch (8) des Ethernet-Netzwerk Controllers (4) ausgestaltet ist, dass der Ethernet-Netzwerk-Controller (4) eine 2. Schnittstelle (9) aufweist, über welche alle vorhandenen Ethernet Ports mit der Analyse- und Cloud-Einheit (1) verbunden sind und dass die Analyse- und Cloud-Einheit (1) über eine 3. Schnittstelle (10) mit einer cloud (C) verbunden ist.

7. Automatisierungsgerät (5) nach Anspruch 6, **dadurch gekennzeichnet, dass** die erste Schnittstelle (8) in der Weise ausgestaltet ist, dass Ethernet Frames Protokoll-unabhängig übertragen werden.

8. Automatisierungsgerät (5) nach Anspruch 6, **dadurch gekennzeichnet, dass** die Ethernet Frames in der Weise ausgestaltet-sind, dass diese durch das Automatisierungsgerät (5) und/oder dem Netzwerk-Controller (4) an die Automatisierungsgeräte (5) des Netzwerks übertragen werden können und dessen Antwort in der Weise ausgestaltet ist, dass diese als Ethernet Frame über die erste Schnittstelle (8) zurück geliefert werden.

9. Automatisierungsgerät (5) nach Anspruch 6, **dadurch gekennzeichnet, dass** mit Hilfe der Ethernet Frames Daten in die angeschlossenen Automatisierungsgeräte (5) des Netzwerks geschrieben und gelesen werden können.

10. Automatisierungsgerät (5) nach Anspruch 6, **dadurch gekennzeichnet, dass** die eingelesenen Daten und die daraus von der Analyse- und Cloud-Einheit (1) ermittelten Informationen in geeigneter Weise ausgestaltet sind, dass diese über eine zur 3. Schnittstelle (10) zusätzliche separate Ethernet Verbindung und/oder über die erste Schnittstelle (8) und das angeschlossene Netzwerksystem diese in eine cloud (C) übertragen werden können.

11. Automatisierungsgerät (5) nach Anspruch 6, **dadurch gekennzeichnet, dass** die eingelesenen Daten mit Metadaten angereichert und in der Weise ausgestaltet-sind, dass diese in lesbarer Form in die cloud (C) übertragen werden können.

12. Automatisierungsgerät (5) nach Anspruch 6, **dadurch gekennzeichnet, dass** die eingelesenen Daten oder die daraus gewonnenen Informationen in der derart ausgestalteten Analyse- und Cloud Einheit (1) nach Geräte- und Prozessdaten oder einer individuell konfigurierbaren Funktion gefiltert werden und dass die Analyse- und Cloud Einheit (1) in der Weise ausgestaltet ist, dass_diese in geeigneter Form in zwei clouds (C) oder auch in unterschiedlichen Plattformen innerhalb einer cloud (C) übertragen werden können.

13. Automatisierungsgerät (5) nach Anspruch 6, **dadurch gekennzeichnet, dass** die eingelesenen Daten oder die daraus gewonnenen Informationen in der derart ausgestalteten Analyse- und Cloud Einheit (1) weiterverarbeitet werden können und dass diese mit Hilfe von aus der cloud (C) ladbaren Softwaremodulen bei bereits montierten oder in Betrieb genommenen Automatisierungsgeräte (5) nachgeladen, aktualisiert oder ausgetauscht werden kann.

14. Automatisierungsgerät (5) nach Anspruch 1 oder Anspruch 6, **dadurch gekennzeichnet, dass** die Analyse- und Cloud-Einheit (1) eine zentrale Recheneinheit (APC) aufweist, welche in der Weise ausgestaltet ist, dass diese den gesamten Ablauf zwischen angeschlossenem Netzwerk-Controller (4) und Analyse und Cloud Einheit (1) steuert und die Ethernet Frames generiert, welche über den Netzwerk-Controller (4) in das Automatisierungs-Netzwerk über einen Anschluss (7) ein- und ausgekoppelt werden, dass die Analyse- und Cloud-Einheit (1) einen Analyzer Core (ANC) aufweist, welcher in der Weise ausgestaltet ist, dass dieser die empfangenen Ethernet Frames und die gefilterten Daten analysiert und daraus den Geräte- und Netzwerkstatus bildet und dass in der Analyse und Cloud Einheit (1) ein Edge Gateway Core (EGC) als dritte Schnittstelle (10) angeordnet ist, welcher in der Weise ausgestaltet ist, dass dieser die Daten aggregiert und über verschiedene Cloud Connectoren in die cloud (C) überträgt.

15. Automatisierungsgerät (5) nach Anspruch 14, **dadurch gekennzeichnet, dass** die Analyse- und Cloud-Einheit (1) einen Security Core (SC) aufweist, welcher mit einem Key Memory (KM) und einem ersten lokalen Speicher (LM1) der Analyse- und Cloud-Einheit (1) verbunden ist und welcher in der Weise ausgestaltet ist, dass diese ein gekapseltes Sicherheitssystem, welches Security Keys verwaltet, Verschlüsselungen und Entschlüsselungen von Daten durchführt und Konfigurationen von Firewalls (F) realisiert und welcher in der Weise ausgestaltet ist, dass dieser über eine in der Analyse- und Cloud-Einheit (1) angeordnete Core Connection Matrix (CM) schreibend und lesend auf den Analyzer Core (ANC), den Edge Gateway Core (EGC), den Application Core (APC) und den Security Core (SC) zugreifen kann und dass die Core Connection Matrix (CM) zusammen mit den Firewalls (F) in der Weise ausgestaltet ist, dass diese als Verbindungsmatrix zwischen einzelnen Einheiten der Analyse- und Cloud-Einheit (1) und einem zweiten lokalen Speicher (LM2) fungieren können.

## Claims

1. Automation device with a module for network analysis and a module for cloud connection, **characterized in that** a single analysis and cloud unit (1) as an independent module (2) of the automation device (5) is integrated in an ASIC (3) of the automation device (5) connected to a network, that the ASIC (3) has an Ethernet network controller (4) with a first interface (8) for loss-free reading of all received data of the network from network components connected to it the device-internal Ethernet side transmitters (8), that the Ethernet network controller (4) has a second interface (9) via which all existing Ethernet ports are connected to the analysis and cloud unit (1) and that the analysis and cloud unit (1) is connected to a cloud (C) via a third interface (10).

2. Automation device (5) according to claim 1, **characterized in that** the analysis and cloud unit (1) is designed in such a way that it records all cyclic data or all acyclic data at these interfaces (8, 9, 10) and evaluate and that a current status overview of the network and the devices connected to it can be determined from the data read in.

3. Automation device (5) according to claim 1, **characterized in that** the analysis and cloud unit (1) is designed in such a way that from the data read in and their recorded reception time, the performance, irregularities and errors in the control of a network component on network can be determined.

4. Automation device (5) according to claim 1, **characterized in that** the analysis and cloud unit (1) is designed in such a way that from the data read in and the reception time recorded for this purpose in the communication of the network components, process errors, transmission errors, time deviations, telegram losses and telegrams that do not fit into the system behavior of the automation device (5) and indicate external intervention can be determined.

5. Automation device (5) according to claim 1, **characterized in that** the analysis and cloud unit (1) is designed in such a way that the start-up of the automation device (5) and the configuration parameters contained therein can be determined from the data read in.

6. Automation device with a module for network analysis and a module for cloud connection, **characterized in that** in the automation device (5) a single analysis and cloud unit (1) is integrated as an independent module (2) that automation device (5) is connected to a network, that an Ethernet network controller (4) arranged in the automation device (5) has a first interface (8) in the form of a UART, SPI, SDIO, MAC, PCIe, dual Port memory, FIFO or similar for exchanging an Ethernet frame with the automation device (5) or an internal Ethernet switch (8) of the Ethernet network controller (4), that the Ethernet network controller (4) has a second interface (9) via which all existing Ethernet ports are connected to the analysis and cloud unit (1) and that the analysis and cloud unit (1) is connected to a cloud (C) via a third interface (10).

7. Automation device (5) according to claim 6, **characterized in that** the first interface (8) is designed in such a way that Ethernet frames are transmitted independently of the protocol.

8. Automation device (5) according to claim 6, **characterized in that** the Ethernet frames are designed in such a way that they can be transmitted by the automation device (5) and/or the network controller (4) to the automation devices (5) of the network and whose response is designed in such a way that it is returned as an Ethernet frame via the first interface (8).

9. Automation device (5) according to claim 6, **characterized in that** the Ethernet frames can be used to write and read data in the connected automation devices (5) of the network.

10. Automation device (5) according to Claim 6, **characterized in that** the data read in and the information determined therefrom by the analysis and cloud unit (1) are designed in a suitable manner so that they can be transferred via an separate Ethernet connection interface additional to the 3rd interface (10) and/or via the first interface (8) and the connected network system to a cloud (C).

11. Automation device (5) according to claim 6, **characterized in that** the read-in data are enriched with metadata and designed in such a way that it can be transmitted to the cloud (C) in readable form.

12. Automation device (5) according to claim 6, **characterized in that** the data read in or the information obtained from them are filtered in the analysis and cloud unit (1) configured in this way according to device and process data or an individually configurable function and that the analysis and cloud unit (1) is designed in such a way that it can be transmitted in a suitable form in two clouds (C) or in different platforms within a cloud (C).

13. Automation device (5) according to claim 6, **characterized in that** the data read in or the information obtained from them can be further processed in the analysis and cloud unit (1) configured in this way and that these can be can be reloaded, updated or exchanged using software modules loaded from the cloud (C), using automation devices (5) that have already been installed or commissioned.

14. Automation device (5) according to claim 1 or claim 6, **characterized in that** the analysis and cloud unit (1) has a central processing unit (APC), which is designed in such a way that this the entire process between the connected network -controller (4) and analysis and cloud unit (1) controls and generates the Ethernet frames, which are coupled into and out of the automation network via the network controller (4) via a connection (7), that the analysis and cloud unit (1) has an analyzer core (ANC), which is designed in such a way that it analyzes the received Ethernet frames and the filtered data and uses them to form the device and network status, and that in the analysis and cloud unit ( 1) an Edge Gateway Core (EGC) is arranged as the third interface (10), which is designed in such a way that it aggregates the data and transmits it to the cloud (C) via various cloud connectors.

15. Automation device (5) according to claim 14, **characterized in that** the analysis and cloud unit (1) has a security core (SC), which is connected with a key memory (KM) and a first local memory (LM1) of the analysis and cloud unit (1) and which is designed in such a way that it implements an encapsulated security system which manages security keys, encrypts and decrypts data and configures firewalls (F) and which is designed in such a way that it can access via a Core Connection Matrix (CM) arranged in the analysis and cloud unit (1) to the Analyzer Core (ANC), the Edge Gateway Core (EGC), the Application Core (APC) and the Security Core (SC) in writing and reading and that the Core Connection Matrix (CM) is designed together with the firewall (F) in such a way that this can act as a connection matrix between individual units of analysis and cloud unit (1) and a second local Memory (LM2).

## Revendications

1. Dispositif d'automatisation avec un module d'analyse de réseau et un module de connexion au cloud, **caractérisé en ce qu'**une seule unité d'analyse et de cloud (1) en tant que module indépendant (2) du dispositif d'automatisation (5) est intégrée dans un ASIC (3) du dispositif d'automatisation (5) étant connecté à un réseau, **en ce que** l'ASIC (3) possède un contrôleur de réseau Ethernet (4) avec une première interface (8) pour une lecture sans perte de toutes les données reçues du réseau à partir de composants de réseau qui lui sont connectés les émetteurs côté Ethernet internes à l'appareil (8), que le contrôleur de réseau Ethernet (4) a une deuxième interface (9) via laquelle tous les ports Ethernet existants sont connectés à l'unité d'analyse et de cloud (1) et que l'unité d'analyse et de cloud (1) est connecté à un cloud (C) via une troisième interface (10).

2. Dispositif d'automatisation (5) selon la revendication 1, **caractérisé en ce que** l'unité d'analyse et de cloud (1) est conçue de telle sorte qu'elle enregistre toutes les données cycliques ou toutes les données acycliques à ces interfaces (8, 9, 10) et évalue et qu'un aperçu de l'état actuel du réseau et des appareils, qui y sont connectés, peut être déterminé à partir des données lues.

3. Dispositif d'automatisation (5) selon la revendication 1, **caractérisé en ce que** l'unité d'analyse et de cloud (1) est conçue de telle manière qu'à partir des données lues et de leur heure de réception enregistrée, les performances, les irrégularités et les erreurs dans le contrôle d'un le composant réseau sur le réseau peut être déterminé.

4. Dispositif d'automatisation (5) selon la revendication 1, **caractérisé en ce que** l'unité d'analyse et de cloud (1) est conçue de telle manière qu'à partir des données lues et de l'heure de réception enregistrée à cet effet dans la communication des composants du réseau, le processus les erreurs, les erreurs de transmission, les écarts de temps, les pertes de télégrammes et les télégrammes, qui ne correspondent pas au comportement du système de l'appareil d'automatisation (5) et indiquent une intervention externe, peut être déterminé.

5. Dispositif d'automatisation (5) selon la revendication 1, **caractérisé en ce que** l'unité d'analyse et de cloud (1) est conçue de telle manière que le démarrage du dispositif d'automatisation (5) et les paramètres de configuration qu'il contient peuvent être déterminés à partir de la données lues.

6. Dispositif d'automatisation avec un module d'analyse de réseau et un module de connexion au cloud, **caractérisé en ce que** dans le dispositif d'automatisation (5) une seule unité d'analyse et de cloud (1) est intégrée en tant que module indépendant (2), ce dispositif d'automatisation (5) étant connecté à un réseau, qu'un contrôleur de réseau Ethernet (4) disposé dans le dispositif d'automatisation (5) à une première interface (8) sous la forme d'un UART, SPI, SDIO, MAC, PCIe, mémoire à double port, FIFO ou similaire pour échanger une trame Ethernet avec l'appareil d'automatisation (5) ou un commutateur Ethernet interne (8) du contrôleur de réseau Ethernet (4), **en ce que** le contrôleur de réseau Ethernet (4) présente une deuxième interface (9) via laquelle tous les ports Ethernet existants sont connectés à l'unité d'analyse et de cloud (1) et que l'unité d'analyse et de cloud (1) est connectée à un cloud (C) via une troisième interface (10).

7. Dispositif d'automatisation (5) selon la revendication 6, **caractérisé en ce que** la première interface (8) est conçue de manière à ce que des trames Ethernet soient transmises indépendamment du protocole.

8. Dispositif d'automatisation (5) selon la revendication 6, **caractérisé en ce que** les trames Ethernet sont conçues de manière à pouvoir être transmises par l'appareil d'automatisation (5) et/ou le contrôleur de réseau (4) aux appareils d'automatisation (5) du réseau et dont la réponse est conçue de telle manière qu'elle est renvoyée sous forme de trame Ethernet via la première interface (8).

9. Dispositif d'automatisation (5) selon la revendication 6, **caractérisé en ce que** les trames Ethernet peuvent être utilisées pour écrire et lire des données dans les appareils d'automatisation connectés (5) du réseau.

10. Dispositif d'automatisation (5) selon la revendication 6, **caractérisé en ce que** les données lues et les informations déterminées à partir de celles-ci par l'unité d'analyse et de cloud (1) sont conçues de manière appropriée pour pouvoir être transférées à un cloud (C) via une interface de connexion Ethernet séparée en plus à la 3ème interface (10) et/ou via la première interface (8) et le système de réseau connecté.

11. Dispositif d'automatisation (5) selon la revendication 6, **caractérisé en ce que** les données lues sont enrichies de métadonnées et conçues de manière à pouvoir être transmises au cloud (C) sous une forme lisible.

12. Dispositif d'automatisation (5) selon la revendication 6, **caractérisé en ce que** les données lues ou les informations obtenues à partir de celles-ci sont filtrées dans l'unité d'analyse et de cloud (1) configurée de cette manière en fonction de données d'appareil et de processus ou d'une fonction configurable individuellement et **en ce que** l'unité d'analyse et de cloud (1) est conçue de telle manière qu'elle peut être transmise sous une forme appropriée dans deux clouds (C) ou sur différentes plates-formes à l'intérieur d'un cloud (C).

13. Dispositif d'automatisation (5) selon la revendication 6, **caractérisé en ce que** les données lues ou les informations obtenues à partir de celles-ci peuvent être traitées ultérieurement dans l'unité d'analyse et de cloud (1) ainsi configurée et **en ce que** celles-ci peuvent être rechargées, mises à jour ou échangés à l'aide de modules logiciels chargés depuis le cloud (C), à l'aide d'appareils d'automatisation (5) déjà installés ou mis en service.

14. Dispositif d'automatisation (5) selon la revendication 1 ou la revendication 6, **caractérisé en ce que** l'unité d'analyse et de cloud (1) comporte une unité centrale de traitement (APC), qui est conçue de telle manière que l'ensemble du processus entre le contrôleur de réseau (4) et l'unité d'analyse et de cloud (1) commandent et génèrent les trames Ethernet, qui sont couplées dans et hors du réseau d'automatisation via le contrôleur de réseau (4) via une connexion (7), que l'unité d'analyse et de cloud (1) comporte un noyau d'analyseur (ANC), qui est conçu de telle manière qu'il analyse les trames Ethernet reçues et les données filtrées et les utilise pour former l'état de l'appareil et du réseau, et cela dans l'unité d'analyse et de cloud (1) un Edge Gateway Core (EGC) est agencé en tant que troisième interface (10), qui est conçu de telle manière qu'il agrège les données et les transmet au cloud (C) via divers connecteurs cloud.

15. Dispositif d'automatisation (5) selon la revendication 14, **caractérisé en ce que** l'unité d'analyse et de cloud (1) comporte un noyau de sécurité (SC), qui est relié à une mémoire de clé (KM) et une première mémoire locale (LM1) de l'analyse et cloud (1) et qui est conçu de manière à mettre en oeuvre un système de sécurité encapsulé, qui gère les clés de sécurité, chiffre et déchiffre les données et configure les pare-feux (F), et qui est conçu de manière à pouvoir accéder via un Core Connection Matrix (CM), agencé dans l'unité d'analyse et de cloud (1), au Analyzer Core (ANC), au Edge Gateway Core (EGC), au Application Core (APC) et au Security Core (SC) en écriture et lecture et que la matrice de connexion centrale (CM) est conçue avec le pare-feu (F) de manière à ce que celui-ci puisse agir comme une matrice de connexion entre les unités d'analyse individuelles et l'unité de cloud (1) et une seconde mémoire locale (LM2).
